# FASCICULE DE BREVET EUROPEEN

(11) **EP 3 715 717 B1**
(45) Date de publication et mention de la délivrance du brevet: **11.08.2021**
(21) Numéro de dépôt: 19305378.2
(22) Date de dépôt: 26.03.2019
(51) Int. Cl.: F23N 1/02, F23N 5/08, F23L 7/00, F23C 6/04, F23C 7/02, F23D 14/22, F23M 5/02

(54) **PROCÉDÉ DE COMBUSTION ET BRÛLEUR POUR SA MISE EN OEUVRE**
VERBRENNUNGSVERFAHREN UND BRENNER FÜR DESSEN UMSETZUNG
COMBUSTION METHOD AND BURNER FOR IMPLEMENTING THE SAME

(43) Date de publication de la demande: 30.09.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: JUMA, Sarah, 78350 LES LOGES EN JOSAS (FR); PAUBEL, Xavier, 78350 LES LOGES EN JOSAS (FR); CAUMONT-PRIM, Chloe, 78350 LES LOGES EN JOSAS (FR); GRAND, Benoit, 78350 LES LOGES EN JOSAS (FR); SENECHAL, Jean-Baptiste, 78350 LES LOGES EN JOSAS (FR)
(74) Mandataire: Air Liquide

(56) Documents cités:
- EP-A1- 3 098 512
- EP-A2- 0 763 692
- EP-A2- 0 844 433
- WO-A1-2013/097165

## Description

La présente invention concerne un procédé de combustion au moyen d'un brûleur, un brûleur adapté pour sa mise en œuvre dans un tel procédé et une installation comprenant de tels brûleurs.

Dans les procédés industriels de combustion, par exemple afin de transformer une charge, l'efficacité du transfert de chaleur de la flamme et des produits de combustion vers la charge est d'une importance primordiale. On distingue notamment le transfert de chaleur par convection et le transfert de chaleur par radiation.

En règle générale, l'intensité d'émission d'une flamme est indicative de la partie de l'énergie générée par la combustion qui est transférée par radiation. La gamme spectrale de l'émission et l'intensité d'émission dans cette gamme est liée à la présence de produits de combustion et de radicaux (espèces intermédiaires) excités, tels que des radicaux d'hydroxyle, qui se désexcitent en émettant à des longueurs d'ondes ou plages de longueurs d'onde spécifiques. La nature et la teneur desdits radicaux excités dépendent à leur tour de paramètres tels que la nature des combustibles et comburant ainsi que leurs débits respectifs et le ratio de leurs débits ainsi qu'à l'état oxydant ou réducteur de cette flamme.

Ces liens sont déjà connus de la demande de brevet EP-A-0763692 dans laquelle un brûleur est décrit qui comporte un premier passage intérieur d'amenée de comburant riche en oxygène (au moins 80% de O₂), un passage intermédiaire d'amenée de combustible entourant extérieurement le premier passage d'amenée de comburant et un deuxième passage extérieur d'amenée de comburant entourant extérieurement le passage d'amenée de combustible. Selon EP-A-0763692, le brûleur comporte un moyen pour faire varier le débit de comburant injecté à travers le premier passage intérieur ce qui permet de contrôler une caractéristique de la flamme telle que la longueur de flamme et la luminosité, en particulier, le contrôle de l'émission du radical OH (aussi noté OH*). Le brûleur connu mentionné ci-dessus est un brûleur avec injection concentrique et adjacente de combustible et comburant générant une flamme de section essentiellement circulaire et donc de transfert de chaleur essentiellement axisymétrique.

Si, pour certaines applications, un tel transfert axisymétrique est souhaité, pour d'autres applications, un transfert de chaleur non-axisymétrique est préférable.

Par exemple, dans un four de fusion de verre dit "à bassin" comportant des brûleurs montés dans les parois verticales au-dessus de la charge, on cherche à maximiser le transfert de chaleur vers la charge située en dessous du niveau des brûleurs et à minimiser le transfert de chaleur vers les parois et la voûte du four. Ceci est notamment réalisé au moyen de brûleurs positionnés dans les parois verticales et à proximité de la charge à chauffer et qui génèrent des flammes dites « flammes plates », en substance parallèles à la surface libre de la charge.

En plus d'un transfert de chaleur optimisé, on recherche, notamment dans les procédés où la flamme interagit directement avec la charge (sans barrière physique entre la flamme et la charge), certaines caractéristiques de flamme afin d'éviter, dans la mesure du possible, des dommages et/ou pertes générées par la combustion. Parmi ces caractéristiques de flamme recherchées, on compte une certaine forme et/ou longueur de flamme et les caractéristiques oxydo-réductrices de flamme.

En effet, une flamme oxydante est susceptible d'interagir avec la charge et de l'oxyder, ce qui est à proscrire dans le cadre de la fusion des métaux non-ferreux par exemple. Dans le cadre de la fusion de verre, l'effet oxydant/réducteur de la flamme peut influencer l'état rédox du verre ou la formation de mousse, avec un impact sur les pertes de produit et les caractéristiques du produit fini, telles que la couleur du verre ou bien sur les consommations énergétiques du four. On note également qu'une flamme réductrice est susceptible de produire des suies et d'autres imbrûlés, ayant un effet sur le transfert thermique et les émissions de polluants dans les gaz brûlés issus de la combustion.

Le rapport comburant/combustible global d'un brûleur est généralement déterminé par la quantité de comburant nécessaire pour assurer la combustion complète du combustible injecté (ou, dans le cas où une combustion partielle du combustible est recherchée, la quantité de comburant nécessaire pour atteindre le degré de combustion recherché).

Afin de réaliser néanmoins un effet oxydant/réducteur par la flamme sur la charge, il est connu de générer une flamme dite "étagée" en injectant au moins une partie du comburant à une distance de l'injection du combustible, voire en injectant au moins une partie du combustible à une distance de l'injection du comburant, de manière à ce que ladite flamme présente une zone oxydante du côté de la charge et une zone réductrice de l'autre côté ou vice-versa.

Ainsi, EP-A-0844433 décrit un procédé de combustion d'un combustible avec un comburant dans une chambre de combustion au moyen d'un brûleur, procédé dans lequel:
- du combustible est injecté dans la chambre de combustion sous forme d'au moins deux jets adjacents;
- la partie principale du comburant est injectée dans la chambre de combustion au-dessus desdits au moins deux jets de combustible à travers au moins une ouverture allongée du brûleur de manière à ce que ladite partie principale du comburant rencontre les jets de combustible dans la chambre de combustion en aval du brûleur,
- le reste du comburant est injecté dans la chambre de combustion autour des au moins deux jets de combustible de manière à réaliser une combustion initiale (flamme initiale) riche en combustible à proximité du brûleur et avant que la partie principale du comburant rencontre les jets de combustible.

De cette manière, il est possible de générer une flamme initiale réductrice à proximité de la charge qui se trouve en dessous de la flamme initiale tout en réalisant une combustion complète du combustible.

Il est connu de WO-A-2013/097165 de générer une flamme plate étagée dans un four avec un combustible solide en forme de particules au moyen d'un brûleur comportant un bloc avec une face inférieure, une face d'entrée et une face de sortie, ledit bloc comportant :
- au moins deux passages d'oxydant primaire, se terminant dans la face de sortie à un même niveau au-dessus de la face inférieure, pour l'injection à haute vélocité d'au moins deux jets d'une première portion d'oxydant primaire,
- au moins deux passages de combustible se terminant dans la face de sortie et à un même niveau de la face inférieure au-dessus des passages d'oxydant primaire, et
- au moins un passage d'oxydant secondaire se terminant dans la face de sortie et à un niveau au-dessus des passages de combustible.

Une buse d'injection de combustible est positionnée dans chaque passage de combustible de manière à définir un passage annulaire entre la face intérieure du passage de combustible et la face extérieure de la buse de combustible. Une deuxième portion d'oxydant primaire est injectée en plusieurs jets annulaires à travers lesdites passages annulaires. Les buses de combustible se terminent en amont de la face de sortie du bloc, de manière à ce que chaque jet de combustible se mélange avec le jet de la seconde portion d'oxydant secondaire qui l'entoure.

De EP-A-3098512 est connu un brûleur oxycombustible monté dans la porte de chargement d'un four rotatif. Ce brûleur comprend au moins deux éléments de brûleur orientés vers différentes portions du four. Chaque élément de brûleur comprend:
- une buse de distribution sélective conçue pour l'écoulement d'un premier réactif ; et
- une buse de distribution proportionnelle conçue pour l'écoulement d'un deuxième réactif ;
- au moins un capteur pour détecter un ou plusieurs paramètres de processus dans le four ; et
- un contrôleur programmé pour contrôler indépendamment le premier flux de réactif vers chaque buse de distribution sélective sur la base au moins en partie des paramètres de processus détectés de façon à ce qu'au moins un élément de brûleur soit actif et au moins un élément de brûleur soit passif, le débit du premier réactif dans la buse de distribution sélective d'un élément de brûleur actif étant supérieur à un débit de premier réactif moyen vers les buses de distribution sélective et le débit de premier réactif dans la buse de distribution sélective d'un élément de brûleur passif étant inférieur audit débit de premier réactif moyen.

Le deuxième réactif est distribué de manière globalement proportionnelle vers les buses de distribution proportionnelle. Quand le premier réactif est un combustible, le deuxième réactif est un oxydant et vice versa.

### But de l'invention

La présente invention a pour but de permettre une régulation de l'effet oxydant ou réducteur de la flamme initiale sur la charge, en particulier dans le cas d'une flamme plate avec injection étagée du comburant. La présente invention a également pour but de permettre une telle régulation en temps réel. Un autre but de la présente invention est de permettre une telle régulation fiable de l'effet oxydant ou réducteur d'une flamme avec une boucle de régulation.

### Le procédé suivant l'invention

A cette fin, la présente invention propose un procédé de combustion, au moyen d'un brûleur, d'un combustible avec un comburant, ladite combustion ayant lieu dans une zone de combustion située en aval du brûleur, par exemple à l'intérieur d'un four tel qu'un four de fusion, notamment d'un four de fusion de verre, d'un four de réchauffage, d'un four de recyclage, etc.

Suivant l'invention, le brûleur comporte un bloc avec une face d'entrée et une face de sortie située à l'opposé de la face d'entrée. La face d'entrée est située à l'opposé de la zone de combustion, la face de sortie du côté de la zone de combustion.

Le bloc du brûleur est typiquement en matière réfractaire et permet le montage du brûleur dans une paroi du four.

Le bloc du brûleur comporte au moins une première perforation qui s'étend de la face d'entrée à la face de sortie. Ladite au moins une première perforation se termine à un premier niveau dans la face de sortie du bloc.

Le bloc du brûleur comporte au moins une deuxième perforation qui s'étend également de la face d'entrée à la face de sortie. Cette au moins une deuxième perforation se termine dans la face de sortie du bloc à un deuxième niveau espacé du premier niveau, le deuxième niveau étant situé en-dessous ou au-dessus du premier niveau.

Au moins un injecteur de combustible est positionné dans la au moins une première perforation. Au moins un injecteur de comburant, dit 'injecteur de comburant principal', est positionné dans la au moins une deuxième perforation.

Dans le procédé suivant l'invention, au moins un jet du combustible est injecté dans la zone de combustion à travers le au moins un injecteur de combustible et la au moins une première perforation correspondante.

Un premier débit de comburant, dit 'débit principal de comburant', est introduit dans la zone de combustion en au moins un jet principal de comburant. Cet au moins un jet principal de comburant est injecté dans la zone de combustion à travers le au moins un injecteur de comburant principal et la au moins une deuxième perforation correspondante, cet au moins un jet principal de comburant étant ainsi injecté dans la zone de combustion en-dessous ou au-dessus du au moins un jet du combustible selon la position de la deuxième perforation par rapport à la au moins une première perforation.

Un deuxième débit de comburant, dit 'débit auxiliaire de comburant', est introduit dans la zone de combustion en contact avec le au moins un jet de combustible. Le débit auxiliaire du comburant est de préférence introduit dans la zone de combustion à travers la au moins une première perforation, notamment autour du ou des injecteurs de combustible situé(s) dans la ou les premières perforations du bloc.

Une flamme initiale est générée dans la zone de combustion par combustion partielle initiale du combustible avec ce débit auxiliaire du comburant. La combustion du combustible dans la flamme initiale étant une combustion partielle, seule une partie du combustible est consommée (brûlée) dans la flamme initiale.

En aval de la flamme initiale, le comburant du au moins un jet principal du comburant se mélange avec le combustible qui n'a pas été consommé par la combustion partielle dans la flamme initiale. De cette manière, la combustion du combustible injecté est complétée en aval de la flamme initiale avec le comburant du au moins un jet principal.

On obtient ainsi une combustion étagée dudit combustible.

Suivant la présente invention, on mesure l'intensité émissive, également appelé intensité d'émission, de la flamme initiale et on régule le débit principal du comburant ou le rapport entre le débit principal du comburant et le débit auxiliaire du comburant en fonction de l'intensité d'émission mesurée.

Suivant une forme de réalisation préférée de l'invention, on mesure l'intensité émissive et également la fréquence d'oscillation de la flamme initiale et on régule le débit principal du comburant ou le rapport entre le débit principal du comburant et le débit auxiliaire du comburant en fonction de l'intensité d'émission et de la fréquence d'oscillation mesurées.

Le combustible utilisé dans le procédé suivant l'invention est généralement un combustible gazeux, tel qu'un combustible choisi parmi le gaz naturel, le biogaz, le propane, le butane, les gaz résiduels de procédés sidérurgiques ou de reformage du méthane, l'hydrogène ou tout mélange d'au moins deux de ces combustibles gazeux.

Le comburant présente généralement une teneur en oxygène de 21 à 100%vol, de préférence d'au moins 80%vol, encore de préférence d'au moins 90%vol.

L'intensité émissive d'une flamme reflète certaines caractéristiques importantes d'une flamme. L'intensité émissive peut notamment être liée à l'état oxydo-réducteur de la flamme et à la nature et la concentration des radicaux excités présents dans la flamme et qui sont les émetteurs du spectre émissif caractéristique de la flamme.

Ainsi, quand l'intensité émissive, et le cas échéant également la fréquence d'oscillation (ou encore une valeur en fonction de ces deux paramètres), de la flamme initiale recherchée sont connues, la détection de l'intensité émissive, et éventuellement également de la fréquence d'oscillation de la flamme initiale, permet de vérifier si la flamme initiale obtenue présente les propriétés de la flamme initiale recherchée, que ce soit pour une flamme recherchée à caractéristiques constantes, voire pour une flamme recherchée à caractéristiques variables dans le temps (voir ci-après).

En mesurant, dans le cas d'une combustion étagée telle que décrite ci-dessus, l'intensité d'émission et, le cas échéant, également la fréquence d'oscillation, de la flamme initiale, la présente invention permet de caractériser cette flamme initiale et de vérifier si elle correspond à la flamme recherchée. Si tel n'est pas le cas, l'invention permet de corriger la flamme en ajustant l'injection de comburant.

Ainsi, suivant la présente invention, on régule le débit principal du comburant ou le rapport entre le débit principal du comburant et le débit auxiliaire du comburant en fonction de l'intensité d'émission et optionnellement aussi de la fréquence d'oscillation mesurée(s).

Comme indiqué ci-dessus, le rapport entre le débit de combustible et le débit global de comburant (comburant principal et comburant auxiliaire) injectés à travers le brûleur est déterminé par le degré de combustion du combustible requis: combustion totale ou partielle.

En régulant/ajustant, suivant la présente invention, le débit principal du comburant ou le rapport entre le débit principal du comburant et le débit auxiliaire du comburant, certaines propriétés de la flamme initiale, notamment l'état oxydo/réducteur de la flamme initiale, sont régulés via l'ajustement du débit auxiliaire de comburant.

L'effet oxydo/réducteur de la flamme initiale dépend du rapport comburant auxiliaire/combustible dans la flamme initiale et, pour un rapport comburant auxiliaire/combustible donné, de la nature du combustible (combustible gazeux/liquide/solide, composition, pouvoir calorifique, présence d'humidité, etc.).

En mesurant, suivant la présente invention, l'intensité d'émission et, le cas échéant, également la fréquence d'oscillation, de la flamme initiale, il est possible de réguler l'effet oxydo/réducteur de la flamme initiale en temps réel, par exemple quand la ou les vannes qui régulent le débit de combustible vers le brûleur ne permettent généralement pas d'assurer une valeur exacte du débit de comburant fourni à la flamme initiale. La présente invention permet également de réguler l'effet oxydo/réducteur de la flamme initiale en temps réel indépendamment de la nature du combustible et ceci même dans le cas d'un combustible à composition variable.

Quand une charge à chauffer se trouve d'un côté de la flamme initiale (typiquement en-dessous de la flamme initiale) et le comburant principal est injecté du côté opposé de la flamme initiale par rapport à la charge, la présente invention permet de réguler l'effet réducteur de la flamme initiale sur la charge.

D'autre part, quand le comburant principal est injecté entre la flamme initiale et une charge à chauffer, la présente invention permet, par le réglage du débit principal du comburant, de réguler l'effet oxydant du débit principal de comburant et donc de la flamme sur la charge.

Ainsi, la présente invention apporte une solution pour les charges particulièrement susceptibles à un tel effet oxydant/réducteur, comme le verre, pour lesquelles une différence entre l'effet oxydant/réducteur recherché et l'effet oxydant/réducteur observé peut avoir un impact important sur la qualité du produit obtenu.

On note également que, quand un four comporte plusieurs brûleurs, une régulation différente peut être utilisée pour différents brûleurs, par exemple, dans un four de fusion/affinage, pour les brûleurs dans la zone de fusion et pour les brûleurs dans la zone d'affinage.

### Le bloc, les perforations et les injecteurs

Le bloc du brûleur peut varier de manière significative en fonction du four, de la flamme et de l'effet recherchés.

Le bloc du brûleur peut ainsi comporter une seule première perforation à travers laquelle le combustible est injecté et/ou une seule deuxième perforation à travers laquelle le comburant principal est injecté. Ladite au moins une première perforation se termine à un premier niveau dans la face de sortie du bloc.

Le bloc peut également comporter plusieurs premières perforations et/ou plusieurs deuxièmes perforations.

Le bloc peut ainsi comporter:
- une seule première perforation et une seule deuxième perforation,
- une seule première perforation et plusieurs deuxièmes perforations,
- plusieurs premières perforations et une seule deuxième perforation, ou encore
- plusieurs premières perforations et plusieurs deuxièmes perforations.

Quand le bloc comporte plusieurs deuxièmes perforations à travers lesquelles le comburant principal est injecté, il convient de distinguer entre:
- les blocs dont les deuxièmes perforations se terminent toutes dans la face de sortie à un niveau situé au-dessus du premier niveau auquel la au moins une première perforation se termine dans la face de sortie,
- les blocs dont les deuxièmes perforations se terminent toutes dans la face de sortie à un niveau situé en-dessous du premier niveau,
- les blocs dont au moins une deuxième perforation se termine dans la face de sortie à un niveau situé en-dessous du premier niveau et dont au moins une deuxième perforation se termine dans la face de sortie à un niveau situé au-dessus du premier niveau (le bloc suivant cette dernière forme de réalisation peut également être décrit comme ayant au moins une deuxième perforation qui se termine dans la face de sortie à un niveau situé au-dessus du premier niveau et ayant au moins une troisième perforation qui se termine dans la face de sortie à un niveau situé en-dessous du premier niveau, voir ci-après).

Chaque forme de réalisation présente ses propres avantages, notamment en ce qui concerne la fabrication du brûleur, sa flexibilité et les propriétés, y compris la forme, de la flamme obtenue, et la sélection de la forme de réalisation utilisée se fait en fonction de l'application visée du procédé suivant l'invention.

En effet, comme mentionné ci-dessus, quand la totalité du comburant principal est injectée dans la zone de combustion à travers une ou des deuxièmes perforations qui se terminent dans la face de sortie à un niveau au-dessus du premier niveau du ou des premières perforations, une charge en-dessous de la flamme peut subir un effet réducteur de la part de la flamme initiale.

Quand la totalité du comburant principal est injectée dans la zone de combustion à travers une ou des deuxièmes perforations qui se terminent dans la face de sortie à un niveau en-dessous du premier niveau de la ou des premières perforations, une charge en-dessous de la flamme peut subir un effet oxydant de la part du comburant principal ainsi injecté.

Un brûleur dont le bloc présente au moins une deuxième perforation qui se termine dans la face de sortie à un niveau situé en-dessous du premier niveau ainsi qu'au moins une deuxième perforation qui se termine dans la face de sortie à un niveau situé au-dessus du premier niveau permet les deux formes de fonctionnement, ainsi qu'une répartition variable du comburant principal entre la au moins une deuxième perforation au-dessus du premier niveau et la au moins une deuxième perforation en-dessous du premier niveau, par exemple en fonction de la nature de la charge, voire en fonction de l'étape d'avancement du procédé (par exemple procédé de fusion) ayant lieu dans le four.

Une première perforation peut accueillir un seul injecteur de combustible ou plusieurs injecteurs de combustible. De manière analogue une deuxième perforation peut accueillir un seul injecteur de comburant principal ou plusieurs injecteurs de comburant principal.

Ainsi, dans le brûleur :
- au moins une, voire chaque, première perforation peut accueillir un seul injecteur de combustible et/ou
- au moins une, voire chaque, deuxième perforation peut accueillir un seul injecteur de comburant principal.

Dans le brûleur :
- au moins une, voire chaque, première perforation peut accueillir plusieurs injecteurs de combustible et/ou
- au moins une, voire chaque, deuxième perforation peut accueillir plusieurs injecteurs de comburant principal,
voire encore:
- au moins une première perforation peut accueillir un seul injecteur de combustible alors qu'au moins une autre première perforation accueille plusieurs injecteurs de combustible et/ou
- au moins une deuxième perforation accueille un seul injecteur de comburant principal alors qu'au moins une autre deuxième perforation accueille plusieurs injecteurs de comburant principal.

Ainsi, suivant une forme de réalisation particulière, le brûleur comporte au moins deux injecteurs de comburant principal positionnés dans la au moins une deuxième perforation du bloc et le débit principal de comburant est introduit dans la zone de combustion en au moins deux jets principaux du comburant injectés dans la zone de combustion en-dessous ou au-dessus du ou des jets du combustible, lesdits au moins deux jets principaux du comburant étant injectés à travers lesdits au moins deux injecteurs du comburant principal et ladite au moins une deuxième perforation.

Le brûleur peut aussi comporter au moins deux injecteurs de combustible positionnés dans la au moins une première perforation du bloc, au moins deux jets du combustible étant injectés dans la zone de combustion à travers lesdits au moins deux injecteurs de combustible et la au moins une première perforation.

Suivant une forme de réalisation, au moins une première perforation du bloc présente une section transversale circulaire et/ou au moins une deuxième perforation du bloc présente une section transversale circulaire. De telles (premières ou deuxièmes) perforations à section transversale en substance circulaire sont notamment utiles pour accueillir un seul injecteur (de combustible, respectivement de comburant principal) et en particulier un seul injecteur qui présente lui-même une section transversale (en substance) circulaire.

Suivant une autre forme de réalisation, au moins une première perforation du bloc présente une section transversale horizontalement allongée et/ou au moins une deuxième perforation du bloc présente une section transversale horizontalement allongée. De telles (premières ou deuxièmes) perforations à section transversale horizontalement allongée sont notamment utiles pour accueillir plusieurs injecteurs, notamment au moins deux injecteurs positionnés l'un à côté de l'autre (par exemple de manière parallèle ou en forme d'éventail). De telles (premières ou deuxièmes) perforations à section transversale horizontalement allongée sont également utiles pour accueillir un injecteur à section transversale également horizontalement élongée. Dans les deux cas, une telle perforation à section horizontalement élongée permet d'injecter le fluide correspondant dans la zone de combustion suivant un écoulement plane et/ou en forme d'éventail.

Comme déjà indiqué ci-dessus, au moins une des premières perforations, c'est-à dire une ou plusieurs, voire chaque, première perforation du bloc, peut accueillir un seul injecteur de combustible. De manière analogue, au moins une des deuxièmes perforations, c'est-à dire une ou plusieurs, voire chaque, deuxième perforation du bloc, peut accueillir un seul injecteur de comburant principal.

Suivant une forme de réalisation avantageuse, le brûleur comporte au moins deux injecteurs de combustible, qui sont donc positionnés dans la au moins une première perforation du bloc, et/ou au moins deux injecteurs de comburant principal, qui sont positionnés dans la au moins une deuxième perforation du bloc. De préférence, le brûleur comporte au moins deux injecteurs de combustible positionnés dans la au moins une première perforation et au moins deux injecteurs de comburant principal positionné dans la au moins une deuxième perforation. Le nombre d'injecteurs de combustible peut être égal à ou différent du nombre d'injecteurs de comburant.

Comme également déjà indiqué, au moins une, c'est à dire une ou plusieurs, voire chaque, première perforation du bloc, peut accueillir plusieurs (≥2) injecteurs de combustible. De manière analogue, une ou plusieurs, voire chaque deuxième perforation du bloc, peut accueillir plusieurs injecteurs de comburant principal.

Quand le brûleur comporte plusieurs (≥2) injecteurs de comburant principal, le bloc du brûleur peut présenter plusieurs (≥2) deuxièmes perforations, chacune accueillant un seul injecteur de comburant principal. De manière analogue, quand le brûleur comporte plusieurs (≥2) injecteurs de combustible, le bloc du brûleur peut présenter plusieurs (≥2) premières perforations, chacune accueillant un seul injecteur de combustible. Suivant une forme de réalisation particulière, chaque première et deuxième perforation du bloc accueille un seul injecteur.

Suivant une forme de réalisation particulièrement adaptable du procédé suivant l'invention, le deuxième niveau, c'est à dire le niveau auquel la au moins une deuxième perforation se termine dans la face de sortie du bloc se situe au-dessus du premier niveau, c'est à dire au-dessus du niveau auquel la au moins une première perforation se termine dans la face de sortie du bloc, le bloc comportant également au moins une (i.e. une ou plusieurs) troisième perforation qui se termine dans la face de sortie du bloc à un troisième niveau situé en-dessous du premier niveau. Au moins un injecteur de comburant principal additionnel étant positionné dans la au moins une troisième perforation.

Il est à noter que le bloc du brûleur peut également comporter une ou plusieurs perforations autres que les premières et deuxièmes perforations, servant, par exemple, comme passage pour un capteur (p. ex. un capteur d'intensité d'émission et/ou de fréquence d'oscillation, capteur de présence de flamme, capteur de température, etc.).

### Mesure de l'intensité d'émission de la flamme/de la fréquence d'oscillation

Dans le procédé suivant l'invention, on mesure l'intensité émissive et optionnellement aussi la fréquence d'oscillation de la flamme initiale dans une gamme spectrale prédéterminée, le débit principal du comburant ou le rapport entre le débit principal du comburant et le débit auxiliaire du comburant étant régulé en fonction de l'intensité d'émission et optionnellement la fréquence d'oscillation mesurée(s).

L'intensité d'émission, et optionnellement la fréquence d'oscillation de la flamme initiale, est typiquement mesurée au moyen d'un capteur dirigé vers la flamme initiale, voire plusieurs tels capteurs.

Ce capteur dirigé vers la flamme initiale à travers une perforation du bloc peut être monté sur le brûleur même ou à un autre endroit approprié du four, par exemple à proximité du brûleur dans la paroi du four dans laquelle le brûleur est monté, dans une autre paroi ou dans la voûte du four.

L'intensité d'émission de la flamme initiale est de manière utile mesurée dans une gamme située dans la plage de 190 à 520 nm, de préférence dans la plage de 280 à 410 nm. On utilisera à cette fin un capteur adapté. Ainsi, on utilise avantageusement un capteur d'intensité émissive qui, dans une gamme entre 300 et 315 nm présente une sensibilité d'à minima 30% de son maximum de sensibilité. L'objectif est de mesurer l'intensité d'émissivité à la longueur d'onde d'émission du radical OH* qui est centrée sur 307 nm+/-5 nm.

La fréquence d'oscillation de la flamme initiale peut être mesurée au moyen du capteur qui mesure également l'émissivité ou au moyen d'un autre capteur.

### Régulation

Différentes formes de régulation du débit principal du comburant ou du rapport entre le débit principal du comburant et le débit auxiliaire du comburant sont possibles.

Le débit principal du comburant ou le rapport entre le débit principal du comburant et le débit auxiliaire du comburant sont avantageusement régulés de manière à ce que l'intensité d'émission de la flamme initiale se trouve dans une zone ou plage d'intensité d'émission prédéterminée. Quand l'intensité d'émission et la fréquence d'oscillation de la flamme initiale sont mesurées, le débit principal du comburant ou le rapport entre le débit principal du comburant et le débit auxiliaire du comburant sont avantageusement régulés de manière à ce que l'intensité d'émission de la flamme initiale se trouve dans une zone ou plage d'intensité d'émission prédéterminée et optionnellement de manière à ce que la fréquence d'oscillation et/ou l'intensité d'émission de la flamme initiale se trouvent dans une plage de fréquence prédéterminée, voire de manière à ce que le produit de l'intensité d'émission et la fréquence d'oscillation de la flamme initiale se trouve dans une plage prédéterminée.

Il est à noter que les plages prédéterminées susmentionnées peuvent être constantes ou peuvent varier dans le temps, par exemple en fonction de la nature de la charge à traiter dans le four ou en fonction de l'étape d'avancement du procédé (par exemple procédé de fusion) ayant lieu dans le four.

Suivant une forme de réalisation particulière, le débit principal du comburant ou le rapport entre le débit principal du comburant et le débit auxiliaire du comburant est régulé de manière à ce que l'intensité d'émission de la flamme primaire corresponde à une valeur d'intensité d'émission prédéterminée. Quand l'intensité d'émission et la fréquence d'oscillation de la flamme initiale sont mesurées, le débit principal du comburant ou le rapport entre le débit principal du comburant et le débit auxiliaire du comburant sont avantageusement régulés de manière à ce que l'intensité d'émission de la flamme primaire corresponde à une valeur d'intensité d'émission prédéterminée optionnellement de manière à ce que la fréquence d'oscillation de la flamme initiale corresponde à une valeur de fréquence d'oscillation prédéterminée, voire de manière à ce que le produit de l'intensité d'émission et la fréquence d'oscillation d'émission de la flamme initiale corresponde à une valeur prédéterminée.

Etant donné que toute détection d'un paramètre est sujet à une marge d'erreur, on considérera dans le présent contexte qu'une valeur donnée correspond à une valeur prédéterminée quand cette première valeur se trouve à l'intérieur de la marge d'erreur autour de la valeur prédéterminée.

Il est également possible d'utiliser une plage prédéterminée comme référence pour l'une de l'intensité émissive et de la fréquence d'oscillation et d'utiliser une valeur prédéterminée comme référence pour l'autre de l'intensité émissive et de la fréquence d'oscillation.

Ces plages ou valeurs prédéterminées qui correspondent typiquement à une flamme initiale avec les caractéristiques recherchées ou à un effet (oxydant/réducteur) recherché de la flamme sur une charge, peuvent être prédéterminées sur la base d'expériences précédentes avec une telle combustion étagée dans le four, notamment en ce qui concerne l'effet sur la charge, au moyen de tests ou encore sur la base de corrélations déjà connues pour le combustible et le comburant utilisés.

Comme déjà indiqué ci-dessus par rapport aux plages prédéterminée, les valeurs prédéterminées susmentionnées peuvent être constantes ou peuvent varier dans le temps, par exemple en fonction de la nature de la charge à traiter dans le four ou en fonction de l'étape d'avancement du procédé dans le four.

Pour la régulation du débit principal du comburant ou du rapport entre le débit principal du comburant et le débit auxiliaire du comburant, l'intensité d'émission mesurée et, le cas échéant également la fréquence d'oscillation mesurée, est transmise à un système de contrôle. Le système de contrôle peut être analogue ou digital, de préférence digital. Le système de contrôle est relié à un système de régulation qui régule le débit principal du comburant, voire qui régule le rapport entre le débit principal du comburant et le débit auxiliaire du comburant, par exemple au moyen d'une ou plusieurs vannes de réglage. Le système de contrôle pilote/contrôle le système de régulation de manière à ce que ce dernier régule le débit principal du comburant, voire le rapport entre le débit principal du comburant et le débit auxiliaire du comburant, en fonction de l'intensité d'émission mesurée et le cas échéant également en fonction de la fréquence d'oscillation mesurée. Suivant une forme de réalisation particulière, le système de contrôle pilote le système de régulation de manière à ce que le système de régulation régule le débit principal du comburant, voire le rapport entre le débit principal du comburant et le débit auxiliaire du comburant, en fonction du produit de l'intensité d'émission mesurée et de la fréquence d'oscillation mesurée.

La transmission de données mesurées vers le système de contrôle, la communication entre le système de contrôle et le système de régulation et la communication entre le système de régulation et l'équipement permettant de faire varier l'écoulement des fluides à travers le brûleur peuvent être réalisées par tous moyens connus, par exemple de manière analogue ou de manière digitale. Une communication sans fil est généralement préférée.

Dans le cas d'une forme de réalisation dans laquelle, la au moins une deuxième perforation se termine dans la face de sortie du bloc à un deuxième niveau situé au-dessus du premier niveau (niveau auquel la au moins une première perforation se termine dans la face de sortie) et le bloc comportant également au moins une troisième perforation dans laquelle au moins un injecteur de comburant principal additionnel est positionné et qui se termine dans la face de sortie à un troisième niveau situé en-dessous du premier niveau, on régule avantageusement non seulement
- le débit principal du comburant ou le rapport entre le débit principal du comburant et le débit auxiliaire du comburant,
mais également, et
- la répartition du comburant principal entre
   ∘ le au moins un injecteur du comburant principal dans la au moins une deuxième perforation et
   ∘ le au moins un injecteur du comburant principal additionnel dans la au moins une troisième perforation
en fonction de l'intensité d'émission mesurée, voire en fonction de l'intensité d'émission mesurée et de la fréquence d'oscillation mesurée. Comme déjà indiqué précédemment, cette régulation peut notamment se faire en fonction du produit de l'intensité d'émission mesurée avec la fréquence d'oscillation mesurée.

Cette forme de réalisation permet, dans le cas d'une charge située en-dessous de la flamme initiale
- de réaliser un effet réducteur sur la charge en injectant l'ensemble du comburant principal au-dessus de la flamme initiale à travers la au moins une deuxième perforation,
- de réaliser un effet oxydant sur la charge en injectant l'ensemble du comburant principal entre la flamme initiale et la charge à travers la au moins une troisième perforation et
- de mitiger ou réguler l'effet oxydant/réducteur sur la charge en régulant la répartition de l'injection du comburant principal entre l'injection au-dessus de la flamme initiale à travers la au moins une deuxième perforation et l'injection en-dessous de la flamme initiale à travers la au moins une troisième perforation.

### Variantes

Le procédé suivant la présente invention connaît un grand nombre de variantes.

Suivant une variante particulièrement avantageuse du procédé suivant l'invention, le au moins un injecteur du combustible est présent sous la forme d'un couple de (a) un injecteur primaire du combustible avec (b) un injecteur secondaire du combustible. Dans ce couple, l'un de l'injecteur primaire et l'injecteur secondaire entoure l'autre de l'injecteur primaire et l'injecteur secondaire.

Suivant cette forme de réalisation, on régule, d'une part, le débit de combustible fourni à l'injecteur primaire du couple et, d'autre part, le débit de combustible fourni à l'injecteur secondaire du couple.

Dans une telle forme de réalisation, le brûleur comporte de préférence un ensemble pour l'injection du combustible avec :
- une chambre ayant une entrée par laquelle le combustible est introduit dans l'ensemble, le ou les couples constituant un injecteurs du combustible qui sont fluidiquement reliés à la chambre,
- un capteur de pression pour la détection d'une pression gazeuse dans la chambre,
- un système de régulation pour le réglage de la répartition du combustible entre l'injecteur primaire et l'injecteur secondaire de chaque injecteur de combustible/couple, le système de contrôle étant relié au capteur de pression et au système de régulation, ledit système de contrôle contrôlant le système de régulation de manière à ce que la répartition du combustible entre l'injecteur primaire et l'injecteur secondaire de chaque injecteur de combustible/couple soit régulée en fonction de la pression gazeuse détectée par le capteur de pression.

On trouvera plus d'informations sur un brûleur avec un tel ensemble pour l'injection du combustible, son fonctionnement et ses avantages dans la demande de brevet européen co-existante 18306820.4 déposée le 21 décembre 2018.

### Brûleur suivant l'invention

La présente invention concerne également un brûleur adapté pour la mise en oeuvre d'une quelconque des formes de réalisation du procédé suivant suivant l'invention.

Un tel brûleur comporte un bloc et un dispositif d'alimentation de fluides.

Le bloc a une face d'entrée et une face de sortie à l'opposé de la face d'entrée. Le bloc présente également:
- au moins une (une ou plusieurs) première perforation qui s'étend de la face d'entrée à la face de sortie et qui se termine à un premier niveau dans la face de sortie du bloc et
- au moins une (une ou plusieurs) deuxième perforation qui s'étend de la face d'entrée à la face de sortie et qui se termine dans la face de sortie à un deuxième niveau,
ce deuxième niveau étant espacé du premier niveau et étant situé en-dessous ou au-dessus du premier niveau.

Le dispositif d'alimentation du brûleur suivant l'invention comporte:
- au moins un injecteur de combustible positionné dans la au moins une première perforation du bloc, et
- au moins un injecteur de comburant principal positionné dans la au moins une deuxième perforation du bloc.

Le dispositif d'alimentation comporte également au moins une alimentation (entrée) de comburant auxiliaire fluidiquement reliée à la moins une première perforation. Cette connexion fluide peut être réalisée grâce à un système de distribution mécanique intégré dans les parties métalliques du brûleur s'attachant à la face d'entrée et s'insérant au moins partiellement dans le bloc.

Le au moins un injecteur de combustible et la au moins une première perforation sont agencés de manière à ce qu'un combustible injecté à travers la face de sortie du bloc au moyen du au moins un injecteur de combustible et de la au moins une première perforation forme au moins un j et du combustible s'étendant selon un premier plan.

De manière analogue, le au moins un injecteur de comburant principal et la au moins une deuxième perforation sont agencés de manière à ce qu'un comburant principal injecté à travers la face de sortie du bloc au moyen du au moins un injecteur de comburant principal et de la au moins une deuxième perforation forme au moins un jet du comburant s'étendant selon un deuxième plan.

Suivant une forme de réalisation, le premier et le deuxième plans se coupent selon une ligne d'intersection située à une distance L en aval de la face de sortie. Quand le brûleur est utilisé dans le procédé suivant l'invention, le comburant principal entrera ainsi en contact avec la fraction du combustible qui n'a pas été consommée dans la flamme initiale autour de cette distance L pour générer la combustion finale dudit combustible.

Suivant une autre forme de réalisation, le premier et le deuxième plans sont parallèles. Dans ce cas le comburant principal entrera également en contact avec la fraction du combustible qui n'a pas été consommée dans la flamme initiale à une distance plus ou moins importante en aval du brûleur à cause du développement (en s'évasant) des jets respectifs dans la zone de combustion.

Le brûleur suivant l'invention comporte également un capteur d'intensité d'émission et optionnellement également un capteur de fréquence d'oscillation, le capteur d'intensité d'émission et le capteur de fréquence d'oscillation pouvant être intégrés dans un seul capteur.

De tels capteurs sont disponibles sur le marché, à l'exemple des contrôleurs de flamme, parfois aussi commercialisés sous les noms de "cellules UV/IR" ou "détecteurs de flamme" par des fournisseurs tels Durag (références DLX-101/DLX-100 ou DLX-201/DLX-200 par exemple) ou, Honeywell (par exemple référence U2-1010S-PF) ou Hamamatsu (par exemple capteur UV C9536/H9958), ou des spectromètres UV ou IR (par exemple Oceanoptics FLAME-S ou FLAME-T series, ou STS-UV-L25-400-SMA ou équivalent chez d'autres fournisseurs) ou des caméras (ICCD, CCD, RGB - par exemple une caméra fournie par Princeton Instruments : PI max 4 ICCD), tous ces appareils étant susceptibles d'être couplés à des filtres optiques (par exemple filtres Asahi XHQA310 ou XHQA300).

Le capteur d'intensité d'émission est dirigé vers le premier plan selon une ligne de visée. Cette ligne de visée coupe le premier plan en face de la au moins une première perforation du bloc et à une distance d de la face de sortie du bloc tel que le ratio d/h = 1 à 10, h étant la distance verticale entre le premier niveau et le deuxième niveau.

De manière analogue, quand un capteur de fréquence d'oscillation est présent, le capteur de fréquence d'oscillation est dirigé selon une ligne de visée vers le premier plan, cette ligne de visée dudit capteur coupant le premier plan en face de la au moins une première perforation et à une distance d de la face de sortie tel que le ratio d/h = 1 à 10.

Pour assurer une mesure plus fiable de l'intensité d'émission et, le cas échéant, de la fréquence d'oscillation, le brûleur peut être équipé d'au moins deux capteurs correspondants.

Le brûleur suivant l'invention comporte un système de régulation qui est apte à réguler:
- un débit de combustible qui est fourni au au moins un injecteur de combustible,
- un débit de comburant, dit 'débit principal du comburant', qui est fourni au au moins un injecteur de comburant principal et
- un débit de comburant, dit 'débit auxiliaire du comburant', qui est fourni à l'alimentation de comburant auxiliaire.

Le brûleur suivant l'invention comporte aussi un système de contrôle qui est relié au capteur d'intensité d'émission (le cas échéant également au capteur de fréquence d'oscillation) et au système de régulation.

Le système de contrôle est adapté, et en particulier programmé, pour contrôler le système de régulation du brûleur de manière à ce que, quand le brûleur est utilisé dans le procédé suivant l'invention, le débit principal du comburant ou le rapport entre le débit principal du comburant et le débit auxiliaire du comburant est régulé en fonction de l'intensité d'émission mesurée par le capteur d'intensité d'émission, et le cas échéant également en fonction de la fréquence d'oscillation mesurée par le capteur de fréquence d'oscillation.

Différentes caractéristiques optionnelles et formes de réalisation du brûleur suivant l'invention sont décrites ci-dessus dans le contexte de la description des différentes formes de réalisation du procédé suivant l'invention.

Ainsi, le système de contrôle du brûleur suivant l'invention peut être adapté, et notamment programmé, pour contrôler le système de régulation de manière à ce que le système de régulation régule/ajuste le débit principal du comburant ou le rapport entre le débit principal du comburant et le débit auxiliaire du comburant de manière à ce que l'intensité d'émission mesurée par le capteur d'intensité d'émission se trouve dans une zone ou plage d'intensité d'émission prédéterminée et optionnellement également de manière à ce que la fréquence d'oscillation mesurée par le capteur de fréquence d'oscillation se trouve dans une zone ou plage de fréquence d'oscillation prédéterminée.

Suivant d'autres formes de réalisation, le système de contrôle du brûleur régule le débit principal du comburant ou le rapport entre le débit principal du comburant et le débit auxiliaire du comburant de manière à ce que:
- à ce que le produit de l'intensité d'émission mesurée avec la fréquence d'oscillation mesurée se trouve dans une plage prédéterminée, ou
- à ce que l'intensité d'émission mesurée corresponde à une valeur d'intensité d'émission prédéterminée, et optionnellement également de manière à ce que la fréquence d'oscillation mesurée corresponde à une valeur de fréquence d'oscillation prédéterminée, ou
- à ce que le produit de l'intensité d'émission mesurée avec la fréquence d'oscillation mesurée corresponde à une valeur prédéterminée.

Suivant une forme de réalisation particulière du brûleur suivant l'invention, le au moins un injecteur du combustible est un couple d'un injecteur primaire du combustible avec un injecteur secondaire du combustible, couple dans lequel l'un de l'injecteur primaire et l'injecteur secondaire entoure l'autre de l'injecteur primaire et l'injecteur secondaire.

Un tel brûleur présente avantageusement un ensemble pour l'injection du combustible qui comporte une chambre avec une entrée par laquelle le combustible est introduit dans l'ensemble, le au moins un couple constituant le au moins un injecteur du combustible étant fluidiquement reliés à cette chambre.

Ce brûleur est également avantageusement muni d'un capteur de pression pour la détection d'une pression gazeuse dans la chambre.

Il comporte aussi un système de régulation pour le réglage de la répartition du combustible entre l'injecteur primaire et l'injecteur secondaire de chaque couple. Ce système de contrôle est relié au capteur de pression et au système de régulation. Le système de contrôle est adapté, en particulier programmé, pour contrôler le système de régulation de manière à ce que, quand le brûleur est utilisé dans le procédé suivant l'invention, le système de régulation régule la répartition du combustible entre l'injecteur primaire et l'injecteur secondaire de chaque couple en fonction de la pression gazeuse détectée par le capteur de pression de l'ensemble.

Un tel système de contrôle peut être intégré dans une boucle de régulation, pour le réglage de la répartition du combustible entre l'injecteur primaire et l'injecteur secondaire de chaque couple sur la base d'une mesure de pression du combustible gazeux dans la chambre avant sa répartition entre le ou les injecteurs primaires et le ou les injecteurs secondaires.

Comme déjà indiqué ci-dessus, de tels brûleurs sont en particulier décrits dans la demande de brevet européenne co-existante 18306820.4 le 21 décembre 2018.

Suivant une forme de réalisation spécifique, le bloc présente:
- au moins une deuxième perforation qui se termine dans la face de sortie à un deuxième niveau situé au-dessus du premier niveau et
- au moins une troisième perforation qui se termine dans la face de sortie à un troisième niveau situé en-dessous du premier niveau.

Au moins un injecteur de comburant est positionné dans la au moins une deuxième perforation du bloc, de préférence au moins deux tels injecteurs de comburant, et au moins un injecteur de comburant est positionné dans la au moins une troisième perforation du bloc, de préférence au moins deux tels injecteurs.

Dans ce cas, le système de régulation est adapté et en particulier programmé :
- pour réguler le débit principal du comburant ou pour réguler le rapport entre le débit principal du comburant et le débit auxiliaire du comburant, ainsi que
- pour réguler la répartition du comburant entre le au moins un injecteur du combustible dans la au moins une deuxième perforation et le au moins un injecteur du combustible dans la au moins une troisième perforation
ceci sous contrôle du système de contrôle et en fonction de l'intensité d'émission mesurée par le capteur d'intensité d'émission et optionnellement également en fonction de la fréquence d'oscillation mesurée par le capteur de fréquence d'oscillation.

Pour la mise en œuvre du brûleur dans le procédé suivant l'invention, le au moins un injecteur de combustible est fluidiquement relié à une source d'un combustible et le au moins un injecteur de comburant principal est fluidiquement reliée à la au moins une première perforation et à la au moins une alimentation de comburant auxiliaire sont reliés à une source de comburant.

Le combustible de cette source est avantageusement choisi parmi le gaz naturel, le biogaz, le propane, le butane, les gaz résiduels de procédés sidérurgiques ou de reformage du méthane, l'hydrogène ou toute source d'un mélange d'au moins deux de ces combustibles gazeux. La source de comburant est de préférence une source d'un comburant ayant une teneur en oxygène de 21 à 100%vol, de préférence d'au moins 80%vol, encore de préférence au moins 90%vol.

La présente invention concerne également une installation comportant plusieurs brûleurs suivant l'invention.

Au moins deux desdits brûleurs, voire l'ensemble des brûleurs, de l'installation peuvent avantageusement présenter un système de contrôle, tel que décrit ci-dessus en commun. Dans ce cas, le système de contrôle commun contrôle le système de régulation de chacun desdits au moins deux brûleurs.

La présente divulgation concerne également un four équipé d'au moins un et de préférence de plusieurs brûleurs suivant l'invention pour la combustion d'un combustible avec un comburant à l'intérieur d'une zone de combustion du four, voire d'un four équipé d'une installation suivant l'invention pour la combustion d'un combustible avec un comburant à l'intérieur d'une zone de combustion du four, l'invention étant particulièrement intéressante pour les fours choisis parmi les fours de fusion de verre ou de l'émail, ou pour la fusion d'au moins un métal parmi l'aluminium,

le fer, l'acier, le cuivre et le zinc, et les fours de réchauffage, de séchage, de reformage. Grâce à la présence d'un ou plusieurs brûleurs suivant l'invention dans ce four, il est possible, pour une même puissance fournie par un brûleur, de réaliser un effet plus ou moins oxydant ou un effet plus ou moins réducteur de la flamme, notamment sur une charge située en dessous de la flamme.

Ce qui plus est, quand le four comporte plusieurs brûleurs suivant la présente invention, ceci permet de réaliser de manière indépendante pour chaque brûleur un effet plus ou moins oxydant ou un effet plus ou moins réducteur de la flamme, par exemple selon la position du brûleur dans le four.

L'invention permet ainsi, par exemple dans un four de fusion/affinage pour la production de verre affinée, de réaliser un effet oxydant réglable des flammes sur la charge dans la zone de fusion amont et un effet réducteur réglable des flammes sur la charge dans la zone d'affinage aval pour par exemple limiter la formation de mousse.

De manière analogue, dans un four de fusion ou de fusion/affinage pour la production de verre dans lequel la couleur du verre est influencée par l'état rédox de certains ingrédients, la présente invention permet de réguler l'état rédox de ces ingrédients dans le verre fondu afin d'obtenir du verre de la couleur recherchée.

La présente invention et ses avantages seront mieux compris à la lumière des exemples ci-après, référence étant faite aux figures 1 à 4 dans lesquelles:
- la figure 1 est une représentation schématique en coupe transversale d'une première forme de réalisation d'un brûleur suivant l'invention,
- la figure 2 est une représentation schématique en coupe transversale d'une deuxième forme de réalisation d'un brûleur suivant l'invention,
- la figure 3 est une représentation schématique d'une vue en perspective d'une troisième forme de réalisation du brûleur suivant l'invention,
- la figure 4 est un diagramme représentant l'intensité d'émission de la flamme initiale en fonction de la richesse de cette flamme initiale mesurée avec un capteur ayant un pic de sensibilité à 310 nm.

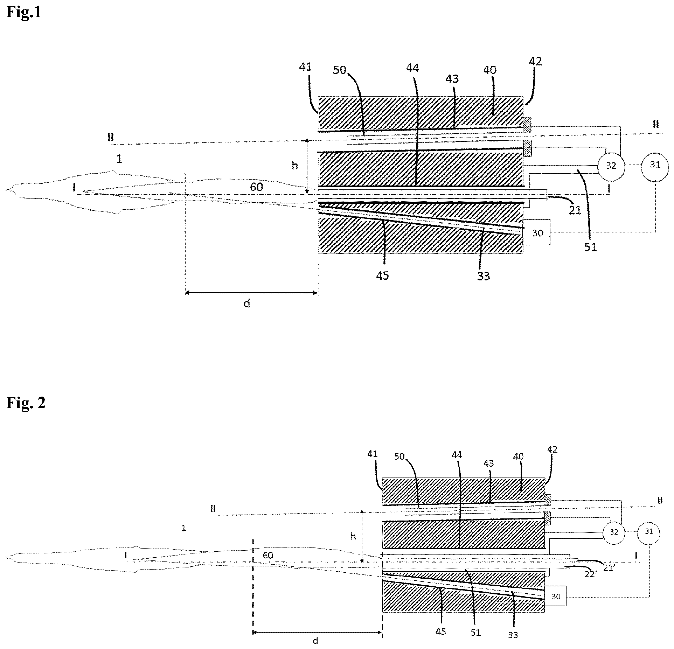

Dans la forme de réalisation illustrée dans la figure 1, le brûleur comporte un bloc 40 fabriqué dans un matériau réfractaire, obtenu par cimentation, par un procédé d'électrofusion ou par un procédé de pressage. Le matériau réfractaire de ce bloc est généralement composé d'alumine et/ou silice et/ou zircone et/ou magnésie de manière non exclusive dans des proportions adaptées au procédé dans lequel le bloc s'intègre, notamment en fonction des températures et des espèces corrosives rencontrées dans le procédé.

Le bloc 40 comporte une face d'entrée 42 à l'opposé de la zone de combustion 1 et une face de sortie 41 du côté de la zone de combustion 1 et à l'opposé de la face d'entrée 42.

Au moins une première perforation 44 s'étend de la face d'entrée 42 à la face de sortie 41. Ladite au moins une première perforation 44 se termine à un premier niveau I-I dans la face de sortie 41 du bloc 40.

Au moins une deuxième perforation 43 s'étend de la face d'entrée 42 à la face de sortie 41. Cette au moins une deuxième perforation 43 se termine dans la face de sortie 41 à un deuxième niveau II-II espacé du premier niveau I-I et situé ou au-dessus du premier niveau I-I à une distance h de ce dernier.

Au moins un injecteur de combustible 21 est positionné dans la au moins une première perforation 44 du bloc 40.

Au moins un injecteur de comburant 50 est positionné dans la au moins une deuxième perforation 43 du bloc 40.

Du combustible est injecté dans la zone de combustion 1 à travers le au moins un injecteur de combustible 21 en un ou plusieurs jets.

Un débit principal de comburant est introduit dans la zone de combustion 1 en au moins un jet principal du comburant au-dessus du ou des jets du combustible et à travers le au moins un injecteur 50.

Un débit auxiliaire du comburant est injecté à travers la au moins une première perforation 44 autour du au moins un injecteur de combustible 21. Ainsi, le débit auxiliaire du comburant est injecté dans la zone de combustion 1 en contact avec le combustible de manière à générer une flamme initiale 60 dans la zone de combustion 1 par combustion partielle initiale du combustible avec le débit auxiliaire du comburant.

En aval de la flamme initiale 60, le comburant du au moins un jet principal du comburant se mélange avec le combustible qui n'a pas été consommé par la combustion partielle dans la flamme initiale pour compléter la combustion de ce combustible. Dans le présent contexte, l'expression "combustible qui n'a pas été consommé par la combustion partielle de la flamme initiale" comprend à la fois du combustible qui n'a pas été oxydé dans la flamme initiale ainsi que des produits de combustion partielle issus de la flamme initiale.

Un capteur d'intensité d'émission 30 est positionné de manière à ce que sa ligne de visée 33 est dirigée vers la flamme initiale 60. Ledit capteur 30 permet de mesurer une intensité d'émission de la flamme initiale 60.

Dans la forme de réalisation illustrée, le capteur 30 est rattaché à la face d'entrée 42 du brûleur en dessous du premier niveau I-I et à l'entrée d'une perforation supplémentaire 45 dont l'axe correspond à la ligne de visée 33 du capteur 30. La ligne de visée 33 couper le niveau I-I (c'est-à-dire le plan du ou des jets du combustible, voire l'axe d'une des premières perforations/d'une des injecteurs de combustible à une distance d de la face de sortie 41 telle que d/h est compris entre 1 et 10.

Selon le type de capteur, le capteur 30 peut également au moins partiellement être monté à l'intérieur d'une telle perforation supplémentaire.

Suivant d'autres formes de réalisation, le capteur 30 peut être séparé du brûleur, à condition que sa position et sa ligne de visée sont telles que le capteur 30 est à même de mesurer une intensité d'émission de la flamme initiale 60 générée par le brûleur.

Le capteur d'intensité d'émissivité 30 visant la flamme initiale est avantageusement un capteur UV.

Comme indiqué précédemment, le capteur 30 mesure avantageusement l'intensité d'émission de la flamme initiale dans une gamme de 190 à 520 nm, ou préférentiellement dans une gamme de 280 à 410 nm, ou encore préférentiellement dans une gamme entre 300 et 315 nm. L'objectif est de mesurer l'intensité d'émissivité à la longueur d'onde d'émission du radical OH* qui est centrée sur 307 nm+/-5 nm.

Le capteur 30 génère un signal correspondant à l'intensité de flamme mesurée et ce signal est transmis à un système de contrôle 31.

Le système de contrôle 31 est relié à un système de régulation 32 qui régule le débit principal du comburant qui est injecté dans la zone de combustion 1 au moyen du ou des injecteurs 50 et le débit auxiliaire de comburant 51 qui est injecté dans la zone de combustion à travers la ou les premières perforations 44 autour du ou des injecteurs de combustible 21. La régulation de débit par le système de régulation 32 peut notamment se faire au moyen d'une ou plusieurs vannes (non-illustrées) dont le système de régulation 32 régule l'ouverture. Il est à noter qu'en régulant à la fois le débit principal du comburant et le débit auxiliaire du comburant 51, le système de régulation 32 régule également le rapport entre le débit principal du comburant et le débit auxiliaire du comburant 51.

Le système de contrôle 31 contrôle le système de régulation 32 de manière à ce que ce dernier régule le débit principal du comburant ou le rapport entre le débit principal du comburant et le débit auxiliaire du comburant 51 en fonction de l'intensité d'émission de la flamme initiale 60 et optionnellement de la fréquence d'oscillation mesurée(s).

En effet, par exemple, plus que l'intensité d'émissivité liée à la présence de radicaux OH* est élevée, plus que la flamme initiale 60 est oxydant. Ainsi, quand cette intensité d'émissivité mesurée par le capteur 30 indique une flamme initiale 60 trop réductrice ou pas assez oxydante pour la charge, le système de contrôle 31 émet un signal au système de régulation 32 de manière à ce que ce dernier dirige un débit plus important du comburant vers la au moins une première perforation 44, réduisant ainsi le rapport entre le débit principal du comburant et le débit auxiliaire du comburant 51 et rendant la flamme initiale moins réducteur ou plus oxydante. Par contre, quand l'intensité d'émissivité mesurée par le capteur 30 indique une flamme initiale 60 pas assez réductrice ou trop oxydante pour la charge, le système de contrôle 31 émet un signal au système de régulation 32 de manière à ce que ce dernier dirige une portion plus faible du débit global du comburant vers la au moins une première perforation 44, augmentant ainsi le rapport entre le débit principal du comburant et le débit auxiliaire du comburant 51 et rendant la flamme initiale 60 plus réductrice ou moins oxydante.

La présente invention permet ainsi de réguler l'effet oxydo-réducteur de la flamme initiale 60 en temps réel peu importe la puissance générée par le brûleur.

Suivant une forme de réalisation non-illustrée, le deuxième niveau II-II est situé en-dessous du premier niveau I-I.

Dans ce cas, la présente invention permet de réguler en temps réel l'effet oxydant du ou des jets du comburant principal, en particulier sur une charge située en-dessous de la flamme initiale et du ou des jets du comburant principal, peu importe la puissance générée par le brûleur.

Le capteur d'intensité d'émission 30 est préférablement combiné à un capteur mesurant la fréquence d'oscillation de la flamme initiale. En effet, il a été constaté que les signaux d'intensité d'émission et de fréquence d'oscillation de la flamme initiale peuvent être combinés pour rendre plus fiable la mesure de l'étagement du comburant et les réglages du brûleur telle que décrite ci-dessus.

La forme de réalisation illustrée dans la figure 2 se distingue de la forme de réalisation illustrée dans la figure 1 en ce que le ou les injecteurs de combustible 21 consiste en un couple de deux injecteurs, notamment un couple d'un injecteur primaire du combustible 21' et d'un injecteur secondaire du combustible 22'. Dans la forme de réalisation illustrée, l'injecteur primaire 21' et l'injecteur secondaire 22' sont concentriques, l'injecteur primaire 21' étant entouré de l'injecteur secondaire 22'.

Suivant cette forme de réalisation, le débit de combustible injecté dans la zone de combustion 1 peut être injecté entièrement à travers l'injecteur primaire 21' du ou des couples d'injecteurs de combustible, entièrement à travers l'injecteur secondaire 22' du ou des couples d'injecteurs de combustible, voire de manière répartie entre l'injecteur primaire 21' et l'injecteur secondaire 22' du ou des couples d'injecteurs de combustible.

Dans cette forme de réalisation il est d'ailleurs avantageux de garantir un minimum de 1% et préférentiellement 5% du débit de combustible injecté par le couple à travers l'injecteur secondaire 22' entourant l'injecteur primaire 21'.

Comme décrit plus en détail dans la demande de brevet européen co-existante 18306820.4 susmentionnée, quand le combustible est un combustible gazeux, le brûleur suivant une telle forme de réalisation comporte avantageusement un ensemble pour l'injection du combustible (non-illustré) présentant :
- une chambre ayant une entrée par laquelle le débit global du combustible est introduit dans l'ensemble,
- le ou les couples constituant les injecteurs du combustible qui sont fluidiquement reliés à la chambre de manière afin de pouvoir recevoir du combustible qui a été introduit dans la chambre par l'entrée de combustible, et
- un capteur de pression pour la détection d'une pression gazeuse dans la chambre située entre l'entrée de combustible et le ou les couples d'injecteurs.

Le brûleur comporte alors également un système de régulation pour le réglage de la répartition du combustible entre l'injecteur primaire 21' et l'injecteur secondaire 22' de chaque injecteur de combustible. De manière avantageuse, le système de contrôle 31 est alors relié au capteur de pression et au système de régulation pour le réglage de la répartition du combustible. Le système de contrôle 31 contrôle également ce dernier système de régulation de manière à ce que la répartition du combustible entre l'injecteur primaire 22' et l'injecteur secondaire 22' de chaque couple est régulée en fonction de la pression gazeuse détectée par le capteur de pression de l'ensemble. De manière avantageuse, le système de contrôle 31 est alors adapté ou programmé pour contrôler le système de régulation 32 de manière à ce que la pression gazeuse dans la chambre se trouve dans une zone/plage de pression prédéterminée, voire que cette pression gazeuse corresponde à une valeur prédéterminée.

Suivant une forme de réalisation particulièrement pratique, le système de régulation 32 régule la répartition du combustible entre l'injecteur primaire 21' et l'injecteur secondaire 22' de chaque couple par le réglage de la section d'écoulement du au moins un passage secondaire reliant le au moins un injecteur secondaire 22' avec la chambre amont.

Une telle forme de réalisation, qui est parfaitement compatible avec la présente invention, permet notamment de réguler la longueur de la flamme générée par le brûleur.

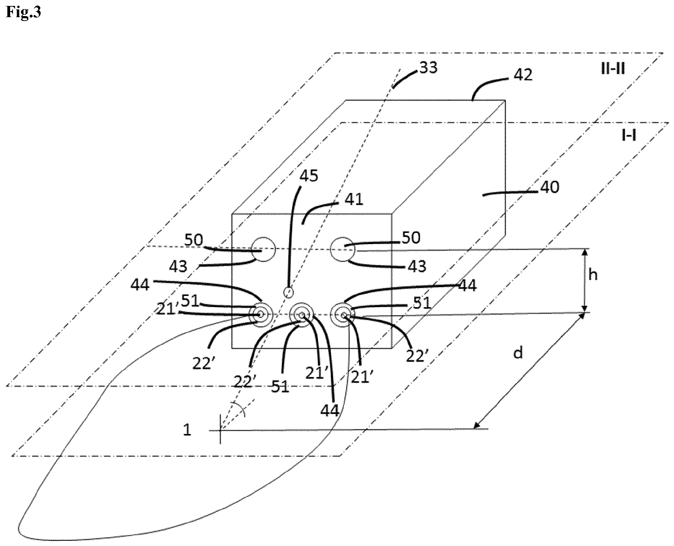

Comme illustré dans la figure 3, le bloc 40 du brûleur peut comporter plusieurs premières perforations 44 et plusieurs deuxièmes perforations 43 qui s'étendent entre la face d'entrée 42 et la face de sortie 41.

Dans la forme de réalisation illustrée, le brûleur comporte trois premières perforations 44 et deux deuxièmes perforations 43. Les deuxièmes perforations 43 se terminent dans la face de sortie 41 à un deuxième niveau II-II situé au-dessus du premier niveau I-I auquel les premières perforations 44 se terminent dans cette face de sortie 41.

Cette géométrie permet de générer une flamme plate.

Également suivant la forme de réalisation illustrée, la ligne de visée 33 du capteur UV/visible 30 traverse une perforation supplémentaire 45 et sort de la face de sortie 41 du bloc 40 entre le premier niveau I-I et le deuxième niveau II-II (et non pas du côté du premier niveau I-I opposé au deuxième niveau II-II, comme c'est le cas suivant les figures 1 et 2).

Bien que la figure 3 montre une forme de réalisation dans laquelle les injecteurs de combustible 21 sont des couples constitués d'un injecteur primaire 21' et d'un injecteur secondaire 22' de combustible, une telle configuration (notamment en ce qui concerne le nombre et la position des différentes perforations 44 et 43 et la position et l'orientation de la ligne de visée 33) est également utilisable pour des formes de réalisation de la présente invention dans laquelle les injecteurs de combustible 21 définissent (chacun) un seul passage d'injection de combustible.

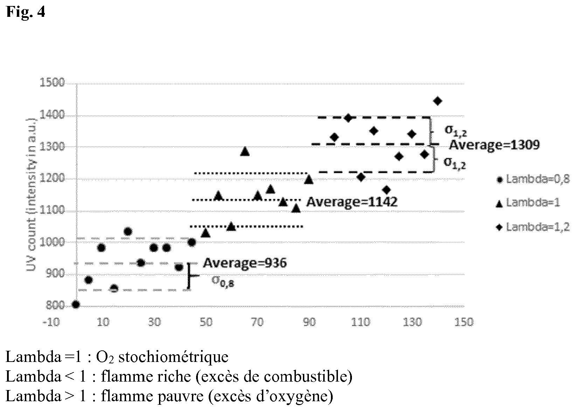

Comme illustré dans la figure 4, il a été observé que la moyenne du signal d'intensité d'émission (moyenne sur quelques secondes) de la flamme initiale est plus élevée lorsque la flamme initiale est pauvre en combustible, comparativement à une moyenne de signal UV plus faible lorsque la flamme initiale est riche en combustible. Ainsi, une intensité UV forte est-elle caractéristique d'une flamme initiale pauvre en combustible, plus courte, et donc d'une atmosphère plutôt oxydante au-dessus de la charge dans la configuration où l'injecteur de combustible est positionné en-dessous de l'injection de comburant principale. Ainsi une intensité UV relativement plus faible est-elle caractéristique d'une flamme initiale riche en combustible, plus longue, et donc d'une atmosphère plutôt réductrice au-dessus de la charge, dans la configuration mise en oeuvre où l'injection de combustible est positionné en-dessous de l'injection de comburant principale. Il a également été noté que la différenciation est également possible, voire meilleure, avec la combinaison des signaux d'intensité et des signaux de fréquence d'oscillation de la flamme.

Les mesures du capteur peuvent donc être utilisées pour réguler la répartition de comburant entre les injections auxiliaires et les injections principales de comburant. Une vanne permet de contrôler la distribution de fluide entre les injections auxiliaires et les injections principales de comburant, et la position de cette vanne est contrôlée en fonction des informations du capteur. Ces réglages peuvent être automatiques, et peuvent avantageusement être mis en oeuvre dans différents procédés de combustion comme la production de verre ou de métaux.

### Exemples de mise en oeuvre.

La couleur et la qualité d'affinage du verre sont contrôlés par une multitude de facteurs comme la quantité d'agent réducteur (carbone, oxyde de fer, sulphide) ou oxydant (sulphate, nitrate, antimonate...) ou d'agent affinant, la concentration en eau de l'atmosphère gazeuse du four, la température du bain, etc. et notamment la quantité d'espèces gazeuses oxydantes (O₂) ou réductrices (CO) issues des flammes des brûleurs et en contact avec la surface du verre. Cependant, la non-linéarité et la complexité des relations entre ces facteurs et l'état redox et la couleur du verre en limitent donc la compréhension quantitative. La mise en oeuvre de technologie de combustion permettant le réglage de l'état de redox de l'atmosphère gazeuse au-dessus du bain de verre (ie en-dessous de la flamme) offre ainsi une flexibilité de contrôle de la couleur et de la qualité du verre.

Une forme de réalisation de l'invention décrite précédemment peut donc avantageusement être utilisé pour contrôler l'étagement du comburant entre l'injection principale et l'injection auxiliaire afin de contrôler la concentration de CO et O₂ autour de la flamme initiale et notamment au dessus du bain de verre. Dans le cas de premières perforations en-dessous de deuxièmes perforations, plus la combustion est étagée (faible débit de comburant auxiliare), plus l'atmosphère gazeuse au-dessus du bain de verre sera réductrice, ce qui est typiquement souhaitable dans la zone d'affinage. Inversement, moins la combustion est étagée (faible débit de comburant principal), plus l'atmosphère gazeuse au-dessus du bain de verre est oxydante, ce qui est typiquement souhaitable dans la zone de chargement.

L'intégration d'un capteur d'intensité émissive capable de quantifier l'étagement de la flamme à travers la richesse locale offre ainsi la possibilité de contrôler de manière quantitative l'état oxydo-réducteur de l'atmosphère gazeuse autour de la flamme initiale et notamment au-dessus du bain de verre sans obligatoirement modifier le débit total de comburant du brûleur.

Ce réglage peut aussi trouver une application avantageuse dans les fours de fusion ou de recyclage de métaux non-ferreux où il est primordial de garder une atmosphère gazeuse réductrice au-dessus du métal en fusion pour éviter l'oxydation dudit métal et des pertes de rendement métalliques. Cependant, maintenir cette atmosphère gazeuse réductrice pendant toute la durée du cycle n'est pas souhaitable car une telle combustion est moins efficace, et susceptible de produire des imbrûlés avec des conséquences au niveau des émissions et des circuits de fumées (usure des filtres, dépôts,...). On imposera alors au brûleur un fonctionnement plutôt oxydant pendant les phases de chargement et le début de fusion, et un fonctionnement plutôt réducteur pendant les phases d'homogénéisation et d'affinage.

Ce réglage peut aussi s'avérer utile pour limiter les émissions d'oxydes d'azote (NOx). En effet, il est connu de l'homme du métier qu'une atmosphère réductrice (présence de CO) permet de réduire les NOx et ainsi limiter la quantité émise à la cheminée.

## Revendications

1. Procédé de combustion, au moyen d'un brûleur, d'un combustible avec un comburant dans une zone de combustion (1) en aval du brûleur, dans lequel le brûleur comporte:
- un bloc (40) avec une face d'entrée (42) à l'opposé de la zone de combustion (1) et une face de sortie (41) du côté de la zone de combustion (1) et à l'opposé de la face d'entrée (42), ledit bloc (40) comportant au moins une première perforation (44) qui s'étend de la face d'entrée (42) à la face de sortie (41) et qui se termine à un premier niveau dans la face de sortie (41) du bloc (40) ainsi qu'au moins une deuxième perforation (43) qui s'étend de la face d'entrée (42) à la face de sortie (41) et qui se termine dans la face de sortie (41) à un deuxième niveau espacé du premier niveau et situé en-dessous ou au-dessus du premier niveau,
- au moins un injecteur de combustible (21) positionné dans la au moins une première perforation (44) du bloc (40),
- au moins un injecteur de comburant principal (50) positionné dans la au moins une deuxième perforation (43) du bloc (40),
procédé dans lequel:
- au moins un jet du combustible est injecté dans la zone de combustion (1) à travers le au moins un injecteur de combustible (21) et la au moins une première perforation (44),
- un débit principal de comburant est introduit dans la zone de combustion (1) en au moins un jet principal du comburant injecté dans la zone de combustion (1) en-dessous ou au-dessus du au moins un jet du combustible et à travers le au moins un injecteur de comburant principal (50) et la au moins une deuxième perforation (43),
- un débit auxiliaire (51) du comburant est introduit dans la zone de combustion (1) en contact avec le au moins un jet de combustible de manière à générer une flamme initiale (60) par combustion partielle initiale du combustible avec le débit auxiliaire du comburant dans la zone de combustion (1),
- le comburant du au moins un jet principal du comburant se mélange en aval de la flamme initiale (60) avec le combustible qui n'a pas été consommé par la combustion partielle dans la flamme initiale (60) de manière à compléter la combustion du combustible avec le comburant du au moins un jet principal en aval de la flamme initiale (60), procédé dans lequel :
- on mesure l'intensité d'émission et optionnellement la fréquence d'oscillation de la flamme initiale (60) et
- on régule le débit principal du comburant ou le rapport entre le débit principal du comburant et le débit auxiliaire du comburant en fonction de l'intensité d'émission et optionnellement de la fréquence d'oscillation mesurée(s).
- on mesure l'intensité d'émission et optionnellement la fréquence d'oscillation de la flamme initiale (60) et
- on régule le débit principal du comburant ou le rapport entre le débit principal du comburant et le débit auxiliaire du comburant en fonction de l'intensité d'émission et optionnellement de la fréquence d'oscillation mesurée(s).

2. Procédé suivant la revendication 1, dans lequel le bloc comporte plusieurs premières perforations (44) et/ou plusieurs deuxièmes perforations (43), de préférence plusieurs premières perforations (44) et plusieurs deuxièmes perforations (43).

3. Procédé suivant la revendication 1 ou 2, dans lequel au moins une et de préférence chaque première perforation (44) accueille un seul injecteur de combustible (21) et/ou dans lequel au moins un et de préférence chaque deuxième perforation (43) accueille un seul injecteur de comburant principal (50).

4. Procédé suivant la revendication 1 ou 2, dans lequel le brûleur comporte au moins deux injecteurs de combustible (21) positionnés dans la au moins une première perforation (44) du bloc (40) et/ou au moins deux injecteurs de comburant principal (50) positionnés dans la au moins une deuxième perforation (43) du bloc (40), de préférence au moins deux injecteurs de combustible (21) positionnés dans la au moins une première perforation (44) et au moins deux injecteurs de comburant principal (50) positionnés dans la au moins une deuxième perforation (43).

5. Procédé suivant l'une quelconque des revendications précédentes, dans lequel le débit auxiliaire du comburant est introduit dans la zone de combustion (1) à travers la au moins une première perforation (44).

6. Procédé suivant l'une quelconque des revendications précédentes, dans lequel l'intensité d'émission et optionnellement la fréquence d'oscillation de la flamme initiale (60) est mesurée au moyen d'un capteur (30) dirigé vers la flamme initiale (60), ledit capteur (30) mesurant de préférence l'intensité d'émission de la flamme initiale (60) dans une gamme de 190 à 520 nm, plus de préférence dans une gamme de 280 à 410 nm, encore de préférence dans une gamme de 300 à 315 nm.

7. Procédé suivant l'une quelconque des revendications précédentes, dans lequel on régule le débit principal du comburant ou le rapport entre le débit principal du comburant et le débit auxiliaire du comburant de manière à ce que:
a. l'intensité d'émission et optionnellement la fréquence d'oscillation de la flamme initiale (60) se trouve dans une plage prédéterminée, ou
b. le produit de l'intensité d'émission et de la fréquence d'oscillation de la flamme initiale (60) se trouve dans une plage prédéterminée.

8. Procédé suivant l'une quelconque des revendications précédentes, dans lequel le brûleur comporte:
- au moins deux injecteurs de comburant principal (50) positionnés dans la au moins une deuxième perforation (43) du bloc (40),
procédé dans lequel:
- le débit principal de comburant est introduit dans la zone de combustion (1) en au moins deux jets principaux du comburant injectés dans la zone de combustion (1) en-dessous ou au-dessus des jets du combustible et à travers les au moins deux injecteurs de comburant principal (50) et la au moins une deuxième perforation (43);
et/ou dans lequel le brûleur comporte:
- au moins deux injecteurs de combustible (21) positionnés dans la au moins une première perforation (44) du bloc (40), procédé dans lequel:
- au moins deux jets du combustible sont injectés dans la zone de combustion (1) à travers les au moins deux injecteurs de combustible (21) et la au moins une première perforation (44),
- le débit auxiliaire (51) du comburant est introduit dans la zone de combustion (1) en contact avec les au moins deux jets de combustible de manière à générer la flamme initiale (60) par combustion partielle initiale du combustible avec le débit auxiliaire du comburant dans la zone de combustion (1).

9. Procédé suivant l'une quelconque des revendications précédentes, dans lequel le au moins un injecteur de combustible (21) est un couple d'un injecteur primaire du combustible avec un injecteur secondaire du combustible, couple dans lequel l'un de l'injecteur primaire et l'injecteur secondaire entoure l'autre de l'injecteur primaire et l'injecteur secondaire, le brûleur présentant un ensemble pour l'injection du combustible, ledit ensemble comportant :
- une chambre ayant une entrée par laquelle le combustible est introduit dans l'ensemble,
- le ou les couples constituant le au moins un injecteur du combustible (21) et fluidiquement reliés à la chambre,
- un capteur de pression pour la détection d'une pression gazeuse dans la chambre,
- un système de régulation pour le réglage de la répartition du combustible entre l'injecteur primaire et l'injecteur secondaire de chaque injecteur de combustible (21), le système de contrôle étant relié au capteur de pression et au système de régulation et contrôlant le système de régulation de manière à ce que la répartition du combustible entre l'injecteur primaire et l'injecteur secondaire de chaque couple est régulée en fonction de la pression gazeuse détectée par le capteur de pression.

10. Procédé suivant l'une quelconque des revendications précédentes, dans lequel l'intensité d'émission et optionnellement la fréquence d'oscillation mesurée(s) est transmise à un système de contrôle (31), ledit système de contrôle étant relié à un système de régulation (32) qui régule le débit principal du comburant ou le rapport entre le débit principal du comburant et le débit auxiliaire du comburant, ledit système de contrôle contrôlant le système de régulation de manière à ce que le débit principal du comburant ou le rapport entre le débit principal du comburant et le débit auxiliaire du comburant est régulé en fonction de l'intensité d'émission et optionnellement la fréquence d'oscillation mesurée(s).

11. Procédé suivant l'une quelconque des revendications précédentes, dans lequel le deuxième niveau auquel appartient la au moins une deuxième perforation (43) se terminant dans la face de sortie (41) du bloc (40) se situe au-dessus du premier niveau, le bloc (40) comportant également au moins une troisième perforation qui se termine dans la face de sortie (41) à un troisième niveau situé en-dessous du premier niveau, au moins un injecteur de comburant principal additionnel étant positionné dans la au moins une troisième perforation, procédé dans lequel on régule le débit principal du comburant ou le rapport entre le débit principal du comburant et le débit auxiliaire du comburant, ainsi que la répartition du comburant principal entre le au moins un injecteur de comburant principal (50) dans la au moins une deuxième perforation (43) et le au moins un injecteur de comburant principal additionnel dans la au moins une troisième perforation en fonction de l'intensité d'émission et optionnellement la fréquence d'oscillation détectée(s).

12. Brûleur adapté pour la mise en œuvre d'un procédé suivant l'une quelconque des revendications 1 à 11, le brûleur comportant un bloc (40) et un dispositif d'alimentation de fluides:
- le bloc (40) présentant une face d'entrée (42) et une face de sortie (41) à l'opposé de la face d'entrée (42) et comportant au moins une première perforation (44) qui s'étend de la face d'entrée (42) à la face de sortie (41) et qui se termine à un premier niveau dans la face de sortie (41) du bloc (40) ainsi qu'au moins une deuxième perforation (43) qui s'étend de la face d'entrée (42) à la face de sortie (41) et qui se termine dans la face de sortie (41) à un deuxième niveau espacé du premier niveau et situé en-dessous ou au-dessus du premier niveau,
- le dispositif d'alimentation comportant
- au moins un injecteur de combustible (21) positionné dans la au moins une première perforation (44) du bloc (40),
- au moins un injecteur de comburant principal (50) positionné dans la au moins une deuxième perforation (43) du bloc (40),
- au moins une alimentation de comburant auxiliaire fluidiquement reliée au à la moins une première perforation (44),
le au moins un injecteur de combustible (21) et la au moins une première perforation (44) étant agencés de manière à ce qu'un combustible injecté à travers la face de sortie (41) du bloc (40) au moyen du au moins un injecteur de combustible (21) et de la au moins une première perforation (44) forme au moins un jet du combustible s'étendant selon un premier plan,
le au moins un injecteur de comburant principal (50) et la au moins une deuxième perforation (43) étant agencés de manière à ce qu'un comburant principal injecté à travers la face de sortie (41) du bloc (40) au moyen du au moins un injecteur de comburant principal (50) et de la au moins une deuxième perforation (43) forme au moins un jet du comburant s'étendant selon un deuxième plan,
ledit deuxième plan et ledit premier plan étant parallèles ou se coupant selon une ligne d'intersection située à une distance en aval de la face de sortie (41),
le brûleur comportant également:
- un capteur (30) d'intensité d'émission et optionnellement de la fréquence d'oscillation dirigé selon une ligne de visée (33) vers le premier plan cette ligne de visée (33) coupant le premier plan en face de la au moins une première perforation (44) et à une distance d de la face de sortie (41) tel que le ratio d/h = 1 à 10, avec h = la distance verticale entre le premier niveau et le deuxième niveau, et
- un système de régulation (31) apte à réguler un débit de combustible fourni au au moins un injecteur de combustible (21), un débit de comburant fourni au au moins un injecteur de comburant principal (50) et un débit de comburant fourni à l'alimentation de comburant auxiliaire, et
- un système de contrôle (32), ledit système de contrôle (32) étant relié audit capteur (30) et au système de régulation (31), ledit système de contrôle (32) contrôlant le système de régulation (31) de manière à ce que le débit principal du comburant ou le rapport entre le débit principal du comburant et le débit auxiliaire du comburant est régulé en fonction de l'intensité d'émission et optionnellement de la fréquence d'oscillation détectée par le capteur (30).

13. Brûleur suivant la revendication 12, dans lequel le système de contrôle (31) pilote le système de régulation (32) de manière à ce que le système de régulation (32) régule le débit principal du comburant ou le rapport entre le débit principal du comburant et le débit auxiliaire du comburant de manière à ce que:
a. l'intensité d'émission et optionnellement la fréquence d'oscillation détectée se trouve dans une zone ou plage d'intensité d'émission et optionnellement de fréquence d'oscillation prédéterminée(s),
b. ou le produit de l'intensité d'émission et de la fréquence d'oscillation de la flamme initiale (60) se trouve dans une plage prédéterminée.

14. Brûleur suivant l'une quelconque des revendications 12 à 13, dans lequel le au moins un injecteur de combustible (21) est un couple d'un injecteur primaire (21') du combustible avec un injecteur secondaire (22') du combustible, couple dans lequel l'un de l'injecteur primaire (21') et l'injecteur secondaire (22') entoure l'autre de l'injecteur primaire (21') et l'injecteur secondaire (22'), ledit brûleur présentant un ensemble pour l'injection du combustible l'ensemble comportant
- une chambre ayant une entrée par laquelle le combustible est introduit dans l'ensemble,
- le ou les couples constituant le au moins un injecteur de combustible (21) et fluidiquement reliés à la chambre,
- un capteur de pression pour la détection d'une pression gazeuse dans la chambre,
- un système de régulation (32) pour le réglage de la répartition du combustible entre l'injecteur primaire (21') et l'injecteur secondaire (22') de chaque injecteur de combustible (21), le système de contrôle (31) étant relié au capteur de pression et au système de régulation (32) et contrôlant le système de régulation (32) de manière à ce que la répartition du combustible entre l'injecteur primaire (21') et l'injecteur secondaire (22') de chaque couple est régulée en fonction de la pression gazeuse détectée par le capteur de pression de l'ensemble.

15. Brûleur suivant l'une quelconque des revendications 12 à 14, dans lequel le bloc (40) comporte au moins une deuxième perforation (43) qui se termine dans la face de sortie (41) à un deuxième niveau situé au-dessus du premier niveau et au moins une troisième perforation qui se termine dans la face de sortie (41) à un troisième niveau situé en-dessous du premier niveau, au moins un injecteur de comburant principal (50), de préférence au moins deux, étant positionné dans la au moins une deuxième perforation (43) du bloc (40) et au moins un injecteur de comburant principal 50), de préférence au moins deux, étant positionné dans la au moins une troisième perforation du bloc (40), le système de régulation (32) régulant le débit principal du comburant ou le rapport entre le débit principal du comburant et le débit auxiliaire du comburant, ainsi que la répartition du comburant principal entre le au moins un injecteur de comburant principal (50) dans la au moins une deuxième perforation (43) et le au moins un injecteur de comburant principal (50) dans la au moins une troisième perforation sous contrôle du système de contrôle (31) et en fonction de l'intensité d'émission et optionnellement la fréquence d'oscillation détectée.

## Patentansprüche

1. Verfahren zur Verbrennung, mittels eines Brenners, eines Brennstoffs mit einem Sauerstoffträger in einer Verbrennungszone (1) stromabwärts hinter dem Brenner, wobei der Brenner aufweist:
- einen Block (40) mit einer Eingangsseite (42) entgegengesetzt zur Verbrennungszone (1) und einer Ausgangsseite (41) auf der Seite der Verbrennungszone (1) und entgegengesetzt zur Eingangsseite (42), wobei der Block (40) mindestens eine erste Durchbohrung (44), die sich von der Eingangsseite (42) zur Ausgangsseite (41) erstreckt und in der Ausgangsseite (41) des Blocks (40) auf einer ersten Höhe endet, sowie mindestens eine zweite Durchbohrung (43) aufweist, die sich von der Eingangsseite (42) zur Ausgangsseite (41) erstreckt und in der Ausgangsseite (41) auf einer zweiten Höhe endet, die einen Abstand zur ersten Höhe hat und sich unter oder über der ersten Höhe befindet,
- mindestens eine Brennstoffeinspritzdüse (21), die in der mindestens einen ersten Durchbohrung (44) des Blocks (40) positioniert ist,
- mindestens eine Sauerstoffträger-Haupteinspritzdüse (50), die in der mindestens einen zweiten Durchbohrung (43) des Blocks (40) positioniert ist,
Verfahren, bei dem:
- mindestens ein Strahl des Brennstoffs durch die mindestens eine Brennstoffeinspritzdüse (21) und die mindestens eine erste Durchbohrung (44) hindurch in die Verbrennungszone (1) eingespritzt wird,
- ein Sauerstoffträger-Hauptdurchsatz in mindestens einem Hauptstrahl des unter oder über dem mindestens einen Strahl des Brennstoffs und durch die mindestens eine Sauerstoffträger-Haupteinspritzdüse (50) und die mindestens eine zweite Durchbohrung (43) hindurch in die Verbrennungszone (1) eingespritzten Sauerstoffträgers in die Verbrennungszone (1) eingeführt wird,
- ein Hilfsdurchsatz (51) des Sauerstoffträgers in Kontakt mit dem mindestens einen Brennstoffstrahl in die Verbrennungszone (1) eingeführt wird, um eine Initialflamme (60) durch teilweise Initialverbrennung des Brennstoffs mit dem Hilfsdurchsatz des Sauerstoffträgers in der Verbrennungszone (1) zu erzeugen,
- der Sauerstoffträger des mindestens einen Hauptstrahls des Sauerstoffträgers sich stromabwärts hinter der Initialflamme (60) mit dem Brennstoff vermischt, der nicht durch die Teilverbrennung in der Initialflamme (60) verbraucht wurde, um die Verbrennung des Brennstoffs mit dem Sauerstoffträger des mindestens einen Hauptstrahls stromabwärts hinter der Initialflamme (60) zu vervollständigen,
Verfahren, bei dem:
- die Emissionsintensität und optional die Schwingungsfrequenz der Initialflamme (60) gemessen wird, und
- der Hauptdurchsatz des Sauerstoffträgers oder das Verhältnis zwischen dem Hauptdurchsatz des Sauerstoffträgers und dem Hilfsdurchsatz des Sauerstoffträgers abhängig von der gemessenen Emissionsintensität und optional der gemessenen Schwingungsfrequenz geregelt wird.

2. Verfahren nach Anspruch 1, wobei der Block mehrere erste Durchbohrungen (44) und/oder mehrere zweite Durchbohrungen (43) aufweist, vorzugsweise mehrere erste Durchbohrungen (44) und mehrere zweite Durchbohrungen (43) .

3. Verfahren nach Anspruch 1 oder 2, wobei mindestens eine und vorzugsweise jede erste Durchbohrung (44) eine einzige Brennstoffeinspritzdüse (21) aufnimmt, und/oder wobei mindestens eine und vorzugsweise jede zweite Durchbohrung (43) eine einzige Sauerstoffträger-Haupteinspritzdüse (50) aufnimmt.

4. Verfahren nach Anspruch 1 oder 2, wobei der Brenner mindestens zwei Brennstoffeinspritzdüsen (21), die in der mindestens einen ersten Durchbohrung (44) des Blocks (40) positioniert sind, und/oder mindestens zwei Sauerstoffträger-Haupteinspritzdüsen (50) aufweist, die in der mindestens einen zweiten Durchbohrung (43) des Blocks (40) positioniert sind, vorzugsweise mindestens zwei Brennstoffeinspritzdüsen (21), die in der mindestens einen ersten Durchbohrung (44) positioniert sind, und mindestens zwei Sauerstoffträger-Haupteinspritzdüsen (50), die in der mindestens einen zweiten Durchbohrung (43) positioniert sind.

5. Verfahren nach einem der vorhergehenden Ansprüche, wobei der Hilfsdurchsatz des Sauerstoffträgers durch die mindestens eine erste Durchbohrung (44) hindurch in die Verbrennungszone (1) eingeführt wird.

6. Verfahren nach einem der vorhergehenden Ansprüche, wobei die Emissionsintensität und optional die Schwingungsfrequenz der Initialflamme (60) mittels eines Sensors (30) gemessen wird, der zur Initialflamme (60) gerichtet ist, wobei der Sensor (30) vorzugsweise die Emissionsintensität der Initialflamme (60) in einem Bereich von 190 bis 520 nm, bevorzugter in einem Bereich von 280 bis 410 nm, noch bevorzugter in einem Bereich von 300 bis 315 nm misst.

7. Verfahren nach einem der vorhergehenden Ansprüche, wobei der Hauptdurchsatz des Sauerstoffträgers oder das Verhältnis zwischen dem Hauptdurchsatz des Sauerstoffträgers und dem Hilfsdurchsatz des Sauerstoffträgers so geregelt wird, dass:
a. die Emissionsintensität und optional die Schwingungsfrequenz der Initialflamme (60) sich in einem vorbestimmten Bereich befindet, oder
b. das Produkt aus der Emissionsintensität und der Schwingungsfrequenz der Initialflamme (60) sich in einem vorbestimmten Bereich befindet.

8. Verfahren nach einem der vorhergehenden Ansprüche, wobei der Brenner aufweist:
- mindestens zwei Sauerstoffträger-Haupteinspritzdüsen (50), die in der mindestens einen zweiten Durchbohrung (43) des Blocks (40) positioniert sind,
Verfahren wobei:
- der Sauerstoffträger-Hauptdurchsatz in mindestens zwei Hauptstrahlen des Sauerstoffträgers in die Verbrennungszone (1) eingeführt wird, die unter oder über den Strahlen des Brennstoffs und durch die mindestens zwei Sauerstoffträger-Haupteinspritzdüsen (50) und die mindestens eine zweite Durchbohrung (43) hindurch in die Verbrennungszone (1) eingespritzt werden;
und/oder wobei der Brenner aufweist:
- mindestens zwei Brennstoffeinspritzdüsen (21), die in der mindestens einen ersten Durchbohrung (44) des Blocks (40) positioniert sind,
Verfahren, bei dem:
- mindestens zwei Strahlen des Brennstoffs durch die mindestens zwei Brennstoffeinspritzdüsen (21) und die mindestens eine erste Durchbohrung (44) hindurch in die Verbrennungszone (1) eingespritzt werden,
- der Hilfsdurchsatz (51) des Sauerstoffträgers in Kontakt mit den mindestens zwei Brennstoffstrahlen in die Verbrennungszone (1) eingeführt wird, um die Initialflamme (60) durch teilweise Initialverbrennung des Brennstoffs mit dem Hilfsdurchsatz des Sauerstoffträgers in der Verbrennungszone (1) zu erzeugen.

9. Verfahren nach einem der vorhergehenden Ansprüche, wobei die mindestens eine Brennstoffeinspritzdüse (21) ein Paar aus einer Primäreinspritzdüse des Brennstoffs und einer Sekundäreinspritzdüse des Brennstoffs ist, ein Paar, bei dem die eine der Primäreinspritzdüse und der Sekundäreinspritzdüse die andere der Primäreinspritzdüse und der Sekundäreinspritzdüse umgibt, wobei der Brenner eine Einheit zum Einspritzen des Brennstoffs aufweist, wobei die Einheit aufweist:
- eine Kammer, die einen Eingang hat, durch den der Brennstoff in die Einheit eingeführt wird,
- das Paar oder die Paare, die die mindestens eine Einspritzdüse des Brennstoffs (21) bilden und mit der Kammer in Fluidverbindung stehen,
- einen Drucksensor zur Erfassung eines Gasdrucks in der Kammer,
- ein Regelungssystem zur Einstellung der Verteilung des Brennstoffs zwischen der Primäreinspritzdüse und der Sekundäreinspritzdüse jeder Brennstoffeinspritzdüse (21), wobei das Kontrollsystem mit dem Drucksensor und mit dem Regelungssystem verbunden ist und das Regelungssystem so kontrolliert, dass die Verteilung des Brennstoffs zwischen der Primäreinspritzdüse und der Sekundäreinspritzdüse jedes Paars abhängig von dem vom Drucksensor erfassten Gasdruck geregelt wird.

10. Verfahren nach einem der vorhergehenden Ansprüche, wobei die gemessene Emissionsintensität und optional die gemessene Schwingungsfrequenz an ein Kontrollsystem (31) übertragen wird, wobei das Kontrollsystem mit einem Regelungssystem (32) verbunden ist, das den Hauptdurchsatz des Sauerstoffträgers oder das Verhältnis zwischen dem Hauptdurchsatz des Sauerstoffträgers und dem Hilfsdurchsatz des Sauerstoffträgers regelt, wobei das Kontrollsystem das Regelungssystem so kontrolliert, dass der Hauptdurchsatz des Sauerstoffträgers oder das Verhältnis zwischen dem Hauptdurchsatz des Sauerstoffträgers und dem Hilfsdurchsatz des Sauerstoffträgers abhängig von der gemessenen Emissionsintensität und optional der gemessenen Schwingungsfrequenz geregelt wird.

11. Verfahren nach einem der vorhergehenden Ansprüche, wobei die zweite Höhe, zu der die mindestens eine zweite Durchbohrung (43) gehört, die in der Ausgangsseite (41) des Blocks (40) endet, sich über der ersten Höhe befindet, wobei der Block (40) ebenfalls mindestens eine dritte Durchbohrung aufweist, die in der Ausgangsseite (41) auf einer dritten Höhe endet, die sich unter der ersten Höhe befindet, wobei mindestens eine zusätzliche Sauerstoffträger-Haupteinspritzdüse in der mindestens einen dritten Durchbohrung positioniert ist, Verfahren, bei dem der Hauptdurchsatz des Sauerstoffträgers oder das Verhältnis zwischen dem Hauptdurchsatz des Sauerstoffträgers und dem Hilfsdurchsatz des Sauerstoffträgers sowie die Verteilung des Hauptsauerstoffträgers zwischen der mindestens einen Sauerstoffträger-Haupteinspritzdüse (50) in der mindestens einen zweiten Durchbohrung (43) und der mindestens einen zusätzlichen Sauerstoffträger-Haupteinspritzdüse in der mindestens einen dritten Durchbohrung abhängig von der erfassten Emissionsintensität und optional der erfassten Schwingungsfrequenz geregelt wird.

12. Brenner, der zur Durchführung eines Verfahrens nach einem der Ansprüche 1 bis 11 geeignet ist, wobei der Brenner einen Block (40) und eine Vorrichtung zur Versorgung mit Fluiden aufweist:
- wobei der Block (40) eine Eingangsseite (42) und eine Ausgangsseite (41) entgegengesetzt zur Eingangsseite (42) hat und mindestens eine erste Durchbohrung (44), die sich von der Eingangsseite (42) zur Ausgangsseite (41) erstreckt und auf einer ersten Höhe in der Ausgangsseite (41) des Blocks (40) endet, sowie mindestens eine zweite Durchbohrung (43) aufweist, die sich von der Eingangsseite (42) zur Ausgangsseite (41) erstreckt und in der Ausgangsseite (41) auf einer zweiten Höhe endet, die einen Abstand zur ersten Höhe hat und sich unter oder über der ersten Höhe befindet,
- wobei die Versorgungsvorrichtung aufweist
- mindestens eine Brennstoffeinspritzdüse (21), die in der mindestens einen ersten Durchbohrung (44) des Blocks (40) positioniert ist,
- mindestens eine Sauerstoffträger-Haupteinspritzdüse (50), die in der mindestens einen zweiten Durchbohrung (43) des Blocks (40) positioniert ist,
- mindestens eine Sauerstoffträger-Hilfsversorgung, die mit der mindestens einen ersten Durchbohrung (44) in Fluidverbindung steht,
wobei die mindestens eine Brennstoffeinspritzdüse (21) und die mindestens eine erste Durchbohrung (44) so eingerichtet sind, dass ein mittels der mindestens einen Brennstoffeinspritzdüse (21) und der mindestens einen ersten Durchbohrung (44) durch die Ausgangsseite (41) des Blocks (40) hindurch eingespritzter Brennstoff mindestens einen Strahl des Brennstoffs bildet, der sich gemäß einer ersten Ebene erstreckt,
wobei die mindestens eine Sauerstoffträger-Haupteinspritzdüse (50) und die mindestens eine zweite Durchbohrung (43) so eingerichtet sind, dass ein mittels der mindestens einen Sauerstoffträger-Haupteinspritzdüse (50) und der mindestens einen zweiten Durchbohrung (43) durch die Ausgangsseite (41) des Blocks (40) hindurch eingespritzter Hauptsauerstoffträger mindestens einen Strahl des Sauerstoffträgers bildet, der sich gemäß einer zweiten Ebene erstreckt,
wobei die zweite Ebene und die erste Ebene parallel sind oder sich gemäß einer Schnittlinie schneiden, die sich in einem Abstand stromabwärts hinter der Ausgangsseite (41) befindet,
wobei der Brenner ebenfalls aufweist:
- einen gemäß einer Visierlinie (33) zur ersten Ebene gerichteter Sensor (30) der Emissionsintensität und optional der Schwingungsfrequenz, wobei diese Visierlinie (33) die erste Ebene gegenüber der mindestens einen ersten Durchbohrung (44) und in einem Abstand d zur Ausgangsseite (41) schneidet, derart, dass das Verhältnis d/h = 1 bis 10 ist, mit h = dem senkrechten Abstand zwischen der ersten Höhe und der zweiten Höhe, und
- ein Regelungssystem (31), das einen an die mindestens eine Brennstoffeinspritzdüse (21) gelieferten Brennstoffdurchsatz, einen an die mindestens eine Sauerstoffträger-Haupteinspritzdüse (50) gelieferten Sauerstoffträgerdurchsatz und einen an die Sauerstoffträger-Hilfsversorgung gelieferten Sauerstoffträgerdurchsatz regeln kann, und
- ein Kontrollsystem (32), wobei das Kontrollsystem (32) mit dem Sensor (30) und mit dem Regelungssystem (31) verbunden ist, wobei das Kontrollsystem (32) das Regelungssystem (31) so kontrolliert, dass der Hauptdurchsatz des Sauerstoffträgers oder das Verhältnis zwischen dem Hauptdurchsatz des Sauerstoffträgers und dem Hilfsdurchsatz des Sauerstoffträgers abhängig von der vom Sensor (30) erfassten Emissionsintensität und optional der erfassten Schwingungsfrequenz geregelt wird.

13. Brenner nach Anspruch 12, wobei das Kontrollsystem (31) das Regelungssystem (32) so kontrolliert, dass das Regelungssystem (32) den Hauptdurchsatz des Sauerstoffträgers oder das Verhältnis zwischen dem Hauptdurchsatz des Sauerstoffträgers und dem Hilfsdurchsatz des Sauerstoffträgers so regelt, dass:
a. die erfasste Emissionsintensität und optional die erfasste Schwingungsfrequenz sich in einer Zone oder einem Bereich der vorbestimmten Emissionsintensität und optional der vorbestimmten Schwingungsfrequenz befindet,
b. oder das Produkt aus der Emissionsintensität und der Schwingungsfrequenz der Initialflamme (60) sich in einem vorbestimmten Bereich befindet.

14. Brenner nach einem der Ansprüche 12 bis 13, wobei die mindestens eine Brennstoffeinspritzdüse (21) ein Paar aus einer Primäreinspritzdüse (21') des Brennstoffs und einer Sekundäreinspritzdüse (22') des Brennstoffs ist, Paar, bei dem die eine von der Primäreinspritzdüse (21') und der Sekundäreinspritzdüse (22') die andere der Primäreinspritzdüse (21') und der Sekundäreinspritzdüse (22') umgibt, wobei der Brenner eine Einheit zum Einspritzen des Brennstoffs aufweist, wobei die Einheit aufweist:
- eine Kammer, die einen Eingang hat, durch den der Brennstoff in die Einheit eingeführt wird,
- das Paar oder die Paare, die mindestens eine Brennstoffeinspritzdüse (21) bilden und mit der Kammer in Fluidverbindung stehen,
- einen Drucksensor zur Erfassung eines Gasdrucks in der Kammer,
- ein Regelungssystem (32) zur Einstellung der Verteilung des Brennstoffs zwischen der Primäreinspritzdüse (21') und der Sekundäreinspritzdüse (22') jeder Brennstoffeinspritzdüse (21), wobei das Kontrollsystem (31) mit dem Drucksensor und mit dem Regelungssystem (32) verbunden ist und das Regelungssystem (32) so kontrolliert, dass die Verteilung des Brennstoffs zwischen der Primäreinspritzdüse (21') und der Sekundäreinspritzdüse (22') jedes Paars abhängig von dem vom Drucksensor der Einheit erfassten Gasdruck geregelt wird.

15. Brenner nach einem der Ansprüche 12 bis 14, wobei der Block (40) mindestens eine zweite Durchbohrung (43), die in der Ausgangsseite (41) auf einer zweiten Höhe endet, die sich über der ersten Höhe befindet, und mindestens eine dritte Durchbohrung aufweist, die in der Ausgangsseite (41) auf einer dritten Höhe endet, die sich unter der ersten Höhe befindet, wobei mindestens eine Sauerstoffträger-Haupteinspritzdüse (50), vorzugsweise mindestens zwei, in der mindestens einen zweiten Durchbohrung (43) des Blocks (40) positioniert ist, und mindestens eine Sauerstoffträger-Haupteinspritzdüse (50), vorzugsweise mindestens zwei, in der mindestens einen dritten Durchbohrung des Blocks (40) positioniert ist, wobei das Regelungssystem (32) den Hauptdurchsatz des Sauerstoffträgers oder das Verhältnis zwischen dem Hauptdurchsatz des Sauerstoffträgers und dem Hilfsdurchsatz des Sauerstoffträgers sowie die Verteilung des Hauptsauerstoffträgers zwischen der mindestens einen Sauerstoffträger-Haupteinspritzdüse (50) in der mindestens einen zweiten Durchbohrung (43) und der mindestens einen Sauerstoffträger-Haupteinspritzdüse (50) in der mindestens einen dritten Durchbohrung unter der Kontrolle des Kontrollsystems (31) und abhängig von der Emissionsstärke und optional der erfassten Schwingungsfrequenz regelt.

## Claims

1. Process for combusting, by means of a burner, a fuel with an oxidant in a combustion zone (1) downstream of the burner, wherein the burner comprises:
- a block (40) with an entrance face (42) opposite the combustion zone (1) and an exit face (41) on the side of the combustion zone (1) and opposite the entrance face (42), said block (40) comprising at least one first perforation (44) that extends from the entrance face (42) to the exit face (41) and that ends at a first level in the exit face (41) of the block (40), and at least one second perforation (43) that extends from the entrance face (42) to the exit face (41) and that ends in the exit face (41) at a second level spaced apart from the first level and located below or above the first level,
- at least one fuel injector (21) positioned in the at least one first perforation (44) of the block (40),
- at least one main oxidant injector (50) positioned in the at least one second perforation (43) of the block (40),
process wherein:
- at least one stream of the fuel is injected into the combustion zone (1) through the at least one fuel injector (21) and the at least one first perforation (44),
- a main oxidant flow is introduced into the combustion zone (1) in at least one main stream of the oxidant injected into the combustion zone (1) below or above the at least one stream of the fuel and through the at least one main oxidant injector (50) and the at least one second perforation (43),
- an auxiliary flow (51) of the oxidant is introduced in the combustion zone (1) into contact with the at least one fuel stream so as to generate an initial flame (60) by initial partial combustion of the fuel with the auxiliary flow of the oxidant in the combustion zone (1),
- the oxidant of the at least one main stream of the oxidant mixes downstream of the initial flame (60) with fuel that was not consumed by the partial combustion in the initial flame (60) so as to complete the combustion of the fuel with the oxidant of the at least one main stream downstream of the initial flame (60),
process wherein:
- the emission intensity and optionally the oscillation frequency of the initial flame (60) is measured, and
- the flow rate of the main flow of the oxidant or the ratio between the flow rate of the main flow of the oxidant and the flow rate of the auxiliary flow of the oxidant is adjusted depending on the measured emission intensity and optionally the measured oscillation frequency.

2. Process according to Claim 1, wherein the block comprises a plurality of first perforations (44) and/or a plurality of second perforations (43), and preferably a plurality of first perforations (44) and a plurality of second perforations (43).

3. Process according to Claim 1 or 2, wherein at least one and preferably each first perforation (44) accommodates a single fuel injector (21) and/or wherein at least one and preferably each second perforation (43) accommodates a single main oxidant injector (50).

4. Process according to Claim 1 or 2, wherein the burner comprises at least two fuel injectors (21) positioned in the at least one first perforation (44) of the block (40) and/or at least two main oxidant injectors (50) positioned in the at least one second perforation (43) of the block (40), and preferably at least two fuel injectors (21) positioned in the at least one first perforation (44) and at least two main oxidant injectors (50) positioned in the at least one second perforation (43) .

5. Process according to any one of the preceding claims, wherein the auxiliary flow of the oxidant is introduced into the combustion zone (1) through the at least one first perforation (44).

6. Process according to any one of the preceding claims, wherein the emission intensity and optionally the oscillation frequency of the initial flame (60) is measured by means of a sensor (30) directed towards the initial flame (60), said sensor (30) preferably measuring the emission intensity of the initial flame (60) in an interval of 190 to 520 nm, more preferably in an interval of 280 to 410 nm, and even more preferably in an interval of 300 to 315 nm.

7. Process according to any one of the preceding claims, wherein the flow rate of the main flow of the oxidant or the ratio between the flow rate of the main flow of the oxidant and the flow rate of the auxiliary flow of the oxidant is adjusted so that:
a. the emission intensity and optionally the oscillation frequency of the initial flame (60) is located in a preset range, or
b. the product of the emission intensity and oscillation frequency of the initial flame (60) is located in a preset range.

8. Process according to any one of the preceding claims, wherein the burner comprises:
- at least two main oxidant injectors (50) positioned in the at least one second perforation (43) of the block (40),
process wherein:
- the main oxidant flow is introduced into the combustion zone (1) in at least two main streams of the oxidant that are injected into the combustion zone (1) below or above the streams of the fuel and through the at least two main oxidant injectors (50) and the at least one second perforation (43);
and/or wherein the burner comprises:
- at least two fuel injectors (21) positioned in the at least one first perforation (44) of the block (40), process wherein:
- at least two streams of the fuel are injected into the combustion zone (1) through the at least two fuel injectors (21) and the at least one first perforation (44),
- the auxiliary flow (51) of the oxidant is introduced in the combustion zone (1) into contact with the at least two fuel streams so as to generate the initial flame (60) by initial partial combustion of the fuel with the auxiliary flow of the oxidant in the combustion zone (1).

9. Process according to any one of the preceding claims, wherein the at least one fuel injector (21) is a pair of a primary injector of the fuel with a secondary injector of the fuel, in which pair one of the primary injector and secondary injector encircles the other of the primary injector and secondary injector, the burner having an assembly for injecting the fuel, said assembly comprising:
- a chamber having an inlet through which the fuel is introduced into the assembly,
- the one or more pairs forming the at least one fuel injector (21) and fluidically connected to the chamber,
- a pressure sensor for detecting a gas pressure in the chamber,
- an adjusting system for adjusting the distribution of the fuel between the primary injector and secondary injector of each fuel injector (21), the control system being connected to the pressure sensor and to the adjusting system and controlling the adjusting system so that the distribution of the fuel between the primary injector and secondary injector of each pair is adjusted depending on the gas pressure detected by the pressure sensor.

10. Process according to any one of the preceding claims, wherein the measured emission intensity and optionally the measured oscillation frequency is transmitted to a control system (31), said control system being connected to an adjusting system (32) that adjusts the flow rate of the main flow of the oxidant or the ratio between the flow rate of the main flow of the oxidant and the flow rate of the auxiliary flow of the oxidant, said control system controlling the adjusting system so that the flow rate of the main flow of the oxidant or the ratio between the flow rate of the main flow of the oxidant and the flow rate of the auxiliary flow of the oxidant is adjusted depending on the measured emission intensity and optionally the measured oscillation frequency.

11. Process according to any one of the preceding claims, wherein the second level to which belongs the at least one second perforation (43) ending in the exit face (41) of the block (40) is located above the first level, the block (40) also comprising at least one third perforation that ends in the exit face (41) at a third level located below the first level, at least one additional main oxidant injector being positioned in the at least one third perforation, process wherein the flow rate of the main flow of the oxidant or the ratio between the flow rate of the main flow of the oxidant and the flow rate of the auxiliary flow of the oxidant, and the distribution of the main oxidant between the at least one main oxidant injector (50) in the at least one second perforation (43) and the at least one additional main oxidant injector in the at least one third perforation are adjusted depending on the detected emission intensity and optionally the detected oscillation frequency.

12. Burner suitable for implementing a process according to any one of Claims 1 to 11, the burner comprising a block (40) and a device for supplying fluids:
- the block (40) having an entrance face (42) and an exit face (41) opposite the entrance face (42) and comprising at least one first perforation (44) that extends from the entrance face (42) to the exit face (41) and that ends at a first level in the exit face (41) of the block (40), and at least one second perforation (43) that extends from the entrance face (42) to the exit face (41) and that ends in the exit face (41) at a second level spaced apart from the first level and located below or above the first level,
- the supplying device comprising
- at least one fuel injector (21) positioned in the at least one first perforation (44) of the block (40),
- at least one main oxidant injector (50) positioned in the at least one second perforation (43) of the block (40),
- at least one auxiliary oxidant feed that is fluidically connected to the at least one first perforation (44),
the at least one fuel injector (21) and the at least one first perforation (44) being arranged so that a fuel injected through the exit face (41) of the block (40) by means of the at least one fuel injector (21) and of the at least one first perforation (44) forms at least one stream of the fuel lying in a first plane,
the at least one main oxidant injector (50) and the at least one second perforation (43) being arranged so that a main oxidant injected through the exit face (41) of the block (40) by means of the at least one main oxidant injector (50) and of the at least one second perforation (43) forms at least one stream of the oxidant lying in a second plane,
said second plane and said first plane being parallel or intersecting at an intersection line located at a distance downstream of the exit face (41),
the burner also comprising:
- a sensor (30) of emission intensity and optionally of oscillation frequency, which sensor is directed along a line of sight (33) towards the first plane, this line of sight (33) intersecting the first plane in front of the at least one first perforation (44) and at a distance d from the exit face (41) such that the ratio d/h = 1 to 10, with h = the vertical distance between the first level and the second level, and
- an adjusting system (31) able to adjust the flow rate of a fuel flow delivered to at least one fuel injector (21), the flow rate of an oxidant flow delivered to the at least one main oxidant injector (50) and the flow rate of an oxidant flow delivered to the auxiliary oxidant feed, and
- a control system (32), said control system (32) being connected to said sensor (30) and to the adjusting system (31), said control system (32) controlling the adjusting system (31) so that the flow rate of the main flow of the oxidant or the ratio between the flow rate of the main flow of the oxidant and the flow rate of the auxiliary flow of the oxidant is adjusted depending on the emission intensity and optionally the oscillation frequency detected by the sensor (30).

13. Burner according to Claim 12, wherein the control system (31) controls the adjusting system (32) so that the adjusting system (32) adjusts the flow rate of the main flow of the oxidant or the ratio between the flow rate of the main flow of the oxidant and the flow rate of the auxiliary flow of the oxidant so that:
a. the emission intensity and optionally the oscillation frequency detected is located in a zone or range of emission intensity and optionally of oscillation frequency that is or are preset,
b. or the product of the emission intensity and oscillation frequency of the initial flame (60) is located in a preset range.

14. Burner according to any one of Claims 12 to 13, wherein the at least one fuel injector (21) is a pair of a primary injector (21') of the fuel with a secondary injector (22') of the fuel, in which pair one of the primary injector (21') and secondary injector (22') encircles the other of the primary injector (21') and secondary injector (22'), said burner having an assembly for injecting the fuel, said assembly comprising:
- a chamber having an inlet through which the fuel is introduced into the assembly,
- the one or more pairs forming the at least one fuel injector (21) and fluidically connected to the chamber,
- a pressure sensor for detecting a gas pressure in the chamber,
- an adjusting system (32) for adjusting the distribution of the fuel between the primary injector (21') and secondary injector (22') of each fuel injector (21), the control system (31) being connected to the pressure sensor and to the adjusting system (32) and controlling the adjusting system (32) so that the distribution of the fuel between the primary injector (21') and secondary injector (22') of each pair is adjusted depending on the gas pressure detected by the pressure sensor of the assembly.

15. Burner according to any one of Claims 12 to 14, wherein the block (40) comprises at least one second perforation (43) that ends in the exit face (41) at a second level located above the first level and at least one third perforation that ends in the exit face (41) at a third level located below the first level, at least one main oxidant injector (50), and preferably at least two main oxidant injectors, being positioned in the at least one second perforation (43) of the block (40) and at least one main oxidant injector (50), and preferably at least two main oxidant injectors, being positioned in the at least one third perforation of the block (40), the adjusting system (32) adjusting the flow rate of the main flow of the oxidant or the ratio between the flow rate of the main flow of the oxidant and the flow rate of the auxiliary flow of the oxidant, and the distribution of the main oxidant between the at least one main oxidant injector (50) in the at least one second perforation (43) and the at least one main oxidant injector (50) in the at least one third perforation under the control of the control system (31) and depending on the emission intensity and optionally the oscillation frequency detected.
